# EUROPÄISCHE PATENTSCHRIFT

(11) **EP 3 188 389 B1**
(45) Veröffentlichungstag und Bekanntmachung des Hinweises auf die Patenterteilung: **29.04.2020**
(21) Anmeldenummer: 15202985.6
(22) Anmeldetag: 29.12.2015
(51) Int. Cl.: H04K 3/00, G07B 15/06, G01S 19/01

(54) **VORRICHTUNG, SYSTEM UND VERFAHREN ZUM REGISTRIEREN EINES STÖRSIGNALS**
DEVICE, SYSTEM AND METHOD FOR REGISTERING AN INTERFERING SIGNAL
DISPOSITIF, SYSTEME ET PROCEDE D'ENREGISTREMENT D'UN SIGNAL PARASITE

(43) Veröffentlichungstag der Anmeldung: 05.07.2017
(73) Patentinhaber: Toll Collect GmbH, 10785 Berlin (DE)
(72) Erfinder: CHOJNICKI, Krzysztof, 13587 Berlin (DE); MIETSCH, Andreas, 13127 Berlin (DE); OLITZSCH, Christian, 16321 Bernau (DE); SLIZEWSKI, Zbigniew, 10437 Berlin (DE)
(74) Vertreter: adares Patent- und Rechtsanwälte Reininger & Partner GmbB

(56) Entgegenhaltungen:
- EP-A1- 2 487 506
- EP-A2- 1 363 421
- DE-A1-102014 108 418

## Beschreibung

Die Erfindung betrifft eine Vorrichtung, ein System und ein Verfahren zum Registrieren eines Störsignals, das geeignet ist, eine Positionsermittlungsfunktion eines Funksignalempfängers, insbesondere eines Mobilfunkempfängers oder eines Empfängers eines Globales Navigationssatelliten-Systems (GNSS), zu beeinträchtigen.

Eine auf GNSS basierte Positionsbestimmungseinrichtung ermittelt aus von mehreren Satelliten ausgesendeten GNSS-Signalen ihre Position mittels eines GNSS-Empfängers. Wenn der GNSS-Empfänger in ein Kraftfahrzeug eingebaut ist, kann er dazu dienen, Positionsdaten entlang einer von dem Kraftfahrzeug befahrenen Straße zu erhalten. Anhand der Positionsdaten kann beispielsweise die Fahrt auf einer mautpflichtigen Straße erkannt, eine fällige Straßenbenutzungsgebühr errechnet und dem Fahrer oder Halter des Kraftfahrzeugs automatisch in Rechnung gestellt werden. GNSS-Empfänger kommen auch in Navigationssystemen zum Einsatz.

Wenn das Kraftfahrzeug eine Störquelle mit sich führt, kann dieser Prozess der Gebührenerhebung negativ beeinflusst werden. Eine Störquelle kann insbesondere ein Störsignal aussenden, mit dem der Empfang von Signalen von Satelliten eines GNSS wie beispielsweise GPS (Globales Positionsbestimmungssystem) gestört werden soll. Ein Störsignal, beispielsweise in Form eines Rauschens oder in Form einzelner oder mehrerer frequenzvariabler oder frequenzinvariabler Träger auf einem oder mehreren Betriebsbändern, z.B. auf dem Betriebsband L1 beim GPS, wird als Jamming-Signal bezeichnet. Ein Störsignal in Form eines Täuschungssignals, das den Signalen mehrerer Satelliten entspricht, jedoch eine falsche Information trägt, die in einem GNSS-Empfänger zur Bestimmung einer anderen Position als der wahren Position führt, wird als Spoofing-Signal bezeichnet.

Wird in einem Kraftfahrzeug eine solche Störquelle eingesetzt, welche die Positionsermittlung des GNSS-Empfängers verfälscht oder gänzlich verhindert, dann kann eine Mautgebühr nicht korrekt errechnet werden. Es ist daher notwendig, ein Kraftfahrzeug, welches eine derartige Störquelle mit sich führt, zu identifizieren. Daraufhin kann der Kraftfahrzeughalter verwarnt oder mit einem Bußgeld belegt werden.

Eine Störquelle, die in einem Frequenzbereich stört, der für die Mobilfunkkommunikation verwendet wird, kann die Übertragung von gebührenrelevanten Daten (beispielsweise von Positionsdaten oder der fahrzeugseitig bestimmten Straßenbenutzungsgebühr selbst) von einer fahrzeugseitigen Einrichtung (on-board unit oder OBU) an die Zentrale unterbinden, wodurch ebenfalls ein Prozess der Mauterhebung gestört werden kann, wenn er eine solche Mobilfunkkommunikation umfasst. Es besteht daher großes Interesse, derartige Manipulationen mittels Störsignalen zu erkennen, egal ob sie eine Mobilfunkkommunikation oder die GNSS-basierte Positionsermittlung betreffen.

Aus der EP 2 535 737 A1 ist eine Einrichtung bekannt, welche eine Störquelle anhand einer Empfangsstärke des von der Störquelle ausgesendeten Störsignals erkennt. Die Einrichtung weist eine Sensoreinheit auf und ist an einem Verkehrswegepunkt fixiert. Wenn ein eine Störquelle mitführendes Kraftfahrzeug den Verkehrswegepunkt passiert, dann wird das von der Störquelle ausgesendete Störsignal von der Sensoreinheit detektiert und ausgewertet. In der EP 2 535 737 A1 wird von einer Störquelle in Form eines sogenannten Spoofers ausgegangen, der ein Spoofing-Signal aussendet. Anhand der Position des Verkehrspunktes wird die Position des Kraftfahrzeuges festgestellt. In EP 2 535 737 A1 wird erläutert, dass zur Detektion des Spoofers Korrelationseigenschaften eines von dem Spoofer ausgesendeten GNSS-Signals und eines von einem Satelliten ausgesendeten GNSS-Signals ermittelt werden. Darüber hinaus können zur Ermittlung des Vorhandenseins eines Spoofers auch Empfangsstärken des von dem Spoofer und des vom Satelliten ausgesendeten GNSS-Signals ermittelt werden. Es wird jedoch jeweils nicht erläutert, wie die ermittelten Korrelationseigenschaften und Empfangsstärken verarbeitet und ausgewertet werden, um das Vorhandensein eines Spoofers zu erkennen.

Die Offenlegungsschrift DE 10 2014 108 418 A1 offenbart ein straßenseitig durchgeführtes Verfahren und eine straßenseitige Vorrichtung zur Erfassung eines Funksignals im GNSS-Signalfrequenzbereich und zur Ermittlung, ob das Funksignal geeignet ist, das Signal eines GNSS zu stören. Dabei wird das Funksignal durch mehrere Empfangsantennen erfasst und an eine Signalverarbeitungseinrichtung übertragen, die anhand der empfangenen Funksignalleistung das Funksignal als Störsignal identifiziert und anhand einer Analyse der Signalcharakteristik des Funksignals das Störsignal als Navigations-Täuschsignal klassifizieren kann.

Die Offenlegungsschrift EP 2 487 506 A1 offenbart ferner ein fahrzeugseitig durchgeführtes Verfahren und eine fahrzeugseitige Vorrichtung zur Bestimmung, ob ein gestörter Empfang von GNSS-Signalen auf topographische Einflüsse oder auf ein Störsignal im GNSS-Signalfrequenzbereich zurückzuführen ist. Dazu wird die Empfangscharakteristik von Mobilfunksignalen im Mobilfunk-Signalfrequenzbereich bestimmt und eine bei Einsetzen eines gestörten GNSS-Empfangs ausbleibende Änderung der bestimmten Empfangscharakteristik als Indiz für das Vorliegen eines Störsignals im GNSS-Signalfrequenzbereich gewertet.

Die Offenlegungsschrift EP 1 363 421 A2 offenbart weiterhin ein fahrzeugseitig durchgeführtes Verfahren und eine fahrzeugseitige Vorrichtung zur Bestimmung eines Störsignals im Mobilfunk-Signalfrequenzbereich mit einer einzigen Empfangsantenne. Dabei werden Signalstärken in verschiedenen Kanälen des Mobilfunkspektrums gemessen und bei einem Überschreiten eines Referenzlevels durch die Signalstärken in mehreren Kanälen ein Störsignal detektiert.

Im Allgemeinen haben Verfahren zur Störsender-Detektion den Nachteil, dass sie keinen eindeutigen Nachweis für die Anwesenheit eines Störsenders auf der Straße liefern. So stammt beispielsweise nicht jedes Signal, welches in einem entsprechenden Frequenzband liegt und dessen Signalstärke einen Schwellwert überschreitet, von einer Störquelle, welche tatsächlich in der Lage ist, die Positionsermittlungsfunktion zu beeinträchtigen, zu verfälschen oder gar zu unterbinden. Anders herum ist nicht immer gewährleistet, dass eine Beeinträchtigung der bestimmungsgemäßen Verarbeitung von Funksignalen von der Existenz eines Störsenders herrührt. Beispielsweise kann es durchaus vorkommen, dass ein Jammer eindeutig die Signalstärke auf einem GNSS-Betriebsband erhöht, aber dennoch keinen wesentlichen Einfluss auf die Anzahl der Satelliten-Kanäle hat, die durch einen GNSS-Empfänger dekodiert wird.

Es besteht somit die Aufgabe, eine Vorrichtung, ein System und ein Verfahren bereitzustellen, mit der ein Störsignal, das geeignet ist, eine Positionsermittlungsfunktion eines Funksignalempfängers zu beeinträchtigen, mit höherer Sicherheit identifiziert und registriert werden kann.

Diese Aufgabe wird durch eine Vorrichtung, durch ein System und durch ein Verfahren gemäß den unabhängigen Ansprüchen gelöst. Vorteilhafte Weiterbildungen sind Gegenstand der abhängigen Ansprüche.

Gemäß einem ersten Aspekt wird eine Vorrichtung zum Registrieren eines Störsignals vorgeschlagen, das geeignet ist, eine Positionsermittlungsfunktion eines Funksignalempfängers zu beeinträchtigen. Bei dem Funksignalempfänger handelt es sich vorzugsweise um einen Mobilfunkempfänger nach einem bekannten Mobilfunkstandard (GSM, UMTS LTE), beispielsweise für die funkzellenbasierte Ortung, oder um einen Empfänger eines Globalen Navigationssatelliten-Systems (GNSS), wie beispielsweise des Globalen Positionierungssystems (GPS). Das Störsignal zu registrieren bedeutet insbesondere, zu erkennen, dass ein Störsignal vorliegt, welches tatsächlich geeignet ist, die Positionsermittlungsfunktion zu beeinträchtigen.

Der Erfindung liegt die Überlegung zugrunde, innerhalb eines Funksignalfrequenzbereiches ein Funksignal zu empfangen, dieses empfangene Funksignal zu analysieren und gegebenenfalls festzustellen, dass es sich um ein Störsignal handelt. Hierbei wird von dem empfangenen Funksignal zum einen eine Empfangssignalstärke gemessen. Zum anderen wird das empfangene Funksignal inhaltlich analysiert, um einen Analysewert zu erhalten. Sowohl die Empfangssignalstärke als auch der Analysewert werden bei der Registrierung des Störsignals berücksichtigt. Bei der Messung der Empfangssignalstärke geht es darum zu ermitteln, ob das empfangene Funksignal ein Kandidat für ein Störsignal ist, wenn nämlich die Empfangssignalstärke des empfangenen Funksignals einen bestimmten Wert überschreitet. Bei der Ermittlung des Analysewertes geht es darum herauszufinden, ob das Funksignal von einem Funksignalempfänger analysiert werden kann, um darauf basierend eine Positionsermittlung oder einen Teil einer Positionsermittlung durchzuführen.

Um die Empfangssignalstärke messen zu können, ist eine erste Messantenne vorgesehen, welche an einer Straße installiert ist. Diese kann an einer Trägervorrichtung wie beispielsweise einem Stativ, einer Brücke oder einer Straßenschildhalterung montiert sein. Die erste Messantenne ist dazu ausgebildet, innerhalb eines Funksignalfrequenzbereiches ein Funksignal zu empfangen. Der Funksignalfrequenzbereich ist vorzugsweise ein Frequenzbereich, innerhalb dessen ein zur Positionsermittlung verwendeter Funksignalempfänger ein Funksignal empfängt und zur Positionsermittlung verarbeitet. Soll beispielsweise ein Störsignal für ein GPS-System registriert werden, dann kann der Funksignalfrequenzbereich das Betriebsband L1 oder ein Teil davon sein, oder der Funksignalfrequenzbereich kann das Betriebsband L1 teilweise oder vollständig abdecken. Die Messantenne ist mit einer Empfangssignalstärke-Messeinrichtung verbunden, welche ausgebildet ist, zu mehreren zeitlich aufeinanderfolgenden Messzeitpunkten jeweils eine Signalstärke des empfangenen Funksignals zu messen.

Für die Analyse des Funksignals wird das Funksignal zunächst mittels einer ebenfalls an der Straße installierten Analyseantenne empfangen. Auch die Analyseantenne ist ausgebildet, das Funksignal innerhalb des oben genannten Funksignalfrequenzbereiches zu empfangen. Die Analyseantenne ist mit einer Empfangssignalspektrum-Analyseeinrichtung verbunden, welches das zu einem ersten Analysezeitpunkt empfangene Funksignal und das zu wenigstens einem zweiten Analysezeitpunkt empfangene Funksignal analysiert. Bei der Analyse wird zumindest der Versuch unternommen, aus dem zu dem ersten Analysezeitpunkt empfangenen Funksignal ein erstes Kanalspektrum und aus dem zu dem zweiten Analysezeitpunkt empfangenen Funksignal ein zweites Kanalspektrum zu ermitteln. Jedes Kanalspektrum enthält im Erfolgsfall der erfolgreichen Ermittlung des Kanalspektrums eine Anzahl an Kanälen von Trägersignalen. Anschließend wird eine Kanalspektrumcharakteristik der Kanalspektren untersucht und für jedes der beiden Kanalspektrum ein Analysewert der Kanalspektrumcharakteristik ermittelt. Das bedeutet, es wird davon ausgegangen, dass das Funksignal im Allgemeinen ein Signalspektrum enthält, aus dem im Erfolgsfall ein Kanalspektrum ermittelt werden kann. Das Kanalspektrum umfasst alle Kanäle von Trägersignalen, die in dem Funksignal enthalten sind. Im Misserfolgsfall eines vergeblichen Versuches der Ermittlung eines ersten und/oder zweiten Kanalspektrums kann als Kanalspektrumcharakteristik die Ermittelbarkeit eines Kanalspektrums gelten. Wenn das GNSS-System über mehrere Satellitensender verfügt, dann sendet jeder Satellit ein Trägersignal über einen eigenen Kanal. Beispielsweise kann ein GPS-Empfänger mit ungehindertem Empfang zu jedem Zeitpunkt das Trägersignal von vier bis zehn Satelliten empfangen, die jeweils auf einem eigenen Kanal senden. Das Kanalspektrum wird in diesem Fall mittels Kanaldemultiplexing aus dem empfangenen Funksignal ermittelt. Das so ermittelte Kanalspektrum wird dann hinsichtlich eines oder mehrerer Kanalspektrumcharakteristiken analysiert, um einen oder mehrere Analysewerte der Kanalspektrumcharakteristiken zu erhalten. Zu jedem Analysezeitpunkt wird also das Funksignal empfangen und analysiert, um einen diesem Analysezeitpunkt zuordenbaren Analysewert zu ermitteln.

Die Empfangssignalspektrum-Analyseeinrichtung ist somit ausgebildet, einen ersten Analysewert einer Kanalspektrumcharakteristik eines ersten Kanalspektrums an Kanälen von Trägersignalen aus dem zu einem ersten Analysezeitpunkt empfangenen Funksignal zu ermitteln und wenigstens einen zweiten Analysewert der Kanalspektrumcharakteristik eines zweiten Kanalspektrums an Kanälen von Trägersignalen aus dem zu wenigstens einem zweiten Analysezeitpunkt empfangenen Funksignal zu ermitteln. Vorzugsweise werden fortlaufend Analysewerte der genannten Kanalspektrumcharakteristik aus dem empfangenen Funksignal ermittelt, das entsprechend zu voneinander beabstandeten Analysezeitpunkten fortlaufend empfangen wird.

Die Vorrichtung weist ferner eine Registriereinrichtung auf, welche mit der Empfangssignalstärke-Messeinrichtung und der Empfangssignalspektrum-Analyseeinrichtung verbunden ist. Die Registriereinrichtung ist ausgebildet, in Abhängigkeit von dem ersten Analysewert und/oder dem zweiten Analysewert das Funksignal als Störsignal zu registrieren, wenn wenigstens einer der Analysezeitpunkte in einem Störsignalzeitabschnitt liegt, in dem die Mehrheit der gemessenen Signalstärken einen vorgegebenen Signalstärke-Schwellwert überschreitet.

Vorzugsweise wird also der Störsignalzeitabschnitt ermittelt, welcher sich dadurch auszeichnet, dass die Mehrheit, also zumindest 50%, vorzugsweise jedoch zumindest 60%, 75% oder 90% der im Störsignalzeitabschnitt gemessenen Signalstärken einen vorgegebenen Signalstärke-Schwellwert überschreitet. Diese Definition lässt es zu, auch Störsignalzeitabschnitte zu bestimmen, in denen auch Signalstärke-Messwerte, die geringer als der Signalstärke-Schwellwert sind, von Messzeitpunkten vorliegen können, die zwischen den Messzeitpunkten von Signalstärke-Messwerten liegen, die größer als der Signalstärke-Schwellwert sind.

Insbesondere überschreiten wenigstens zwei zeitlich aufeinanderfolgend gemessene Signalstärke-Messwerte den vorgegebenen Signalstärke-Schwellwert, wobei zwischen diesen zwei zeitlich aufeinanderfolgend gemessenen Signalstärke-Messwerten, die den vorgegeben Signalstärke-Schwellwert überschreiten, nicht mehr als ein Signalstärke-Messwert liegt, der den vorgegebenen Signalstärke-Schwellwert nicht überschreitet, damit die Vorrichtung einen Störsignalzeitabschnitt bestimmen kann. Damit können Signalerfassungsstörungen und Signalfluktuationen kompensiert werden. Besonders bevorzugt ist natürlich, dass alle im Störsignalzeitabschnitt gemessenen Signalstärken den vorgegebenen Signalstärke-Schwellwert überschreiten. Dieser optimale Fall hängt jedoch von der Art des Störsignals, seiner möglichen Taktung und seines möglichen Signal-Takt-Verhältnisses (duty cycle) ab. Vorzugsweise sind daher die Messzeitpunkte, zu denen die Signalstärke-Messeinrichtung die Signalstärke des Funksignals misst, nicht einfach-periodisch, sondern mehrfach-periodisch oder zufällig: In einer Ausführungsform ist die Signalstärke-Messeinrichtung ausgebildet, Messzeitpunkte periodisch jeweils innerhalb eines vorgegebenen zeitlichen Rahmens zufällig auszuwählen, wobei eine Wahrscheinlichkeitsfunktion, mit der ein Messzeitpunkt in einen bestimmten Abschnitt des zeitlichen Rahmens fällt, zu den Rändern des zeitlichen Rahmens hin abfällt, vorzugsweise gegen Null geht. In einer anderen Ausführungsform ist die Signalstärke-Messeinrichtung ausgebildet, Messzeitpunkte gemäß des Takts zweier einander überlagerter Perioden auszuwählen, die kein ganzzahliges Vielfaches (keine Harmonischen) voneinander sind und keinen gemeinsamen Teiler aufweisen, vorzugsweise primzahliger Perioden, beispielsweise 47ms und 103ms.

Andererseits kann die Empfangssignalstärke-Messeinrichtung alternativ oder optional ausgebildet sein, jeden Signalstärke-Messwert als ein Mittelwert von einer Vielzahl von Signalstärke-Messungen oder eine Integration eines Signalstärkeverlaufs über einen vollen Messtakt von beispielsweise 100ms bereitzustellen.

Der Störsignalzeitabschnitt erlaubt es, die Registrierung eines möglichen Störsignals auf Analysezeitpunkte einzuschränken, welche in dem Störsignalzeitabschnitt liegen. Hierdurch wird die Verlässlichkeit der Vorrichtung erhöht. Nur wenn einer der oder beide Analysezeitpunkte innerhalb des Störsignalzeitabschnittes liegt/ liegen, kann erfindungsgemäß das Funksignal als Störsignal registriert werden. Ob dies geschieht, hängt von dem ersten Analysewert und/oder dem zweiten Analysewert ab.

Gemäß einem weiteren Aspekt der Erfindung ist ein Verfahren zum Registrieren eines Störsignals vorgesehen, das geeignet ist, die Positionsermittlungsfunktion des Funksignalempfängers zu beeinträchtigen. Das Verfahren umfasst folgende Verfahrensschritte: Empfangen eines Funksignals innerhalb eines Funksignalfrequenzbereiches mittels der ersten Messantenne; Messen jeweils einer Signalstärke des empfangenen Funksignals zu mehreren zeitlich aufeinanderfolgenden Messzeitpunkten mittels der Empfangssignalstärke-Messeinrichtung; Empfangen eines Funksignals innerhalb des Funksignalfrequenzbereiches mittels der Analyseantenne; Ermitteln eines ersten Analysewertes einer Kanalspektrumcharakteristik eines ersten Kanalspektrums an Kanälen von Trägersignalen aus dem zu einem ersten Analysezeitpunkt empfangenen Funksignal mittels der Empfangssignalspektrum-Analyseeinrichtung; Ermitteln wenigstens eines zweiten Analysewertes der Kanalspektrumcharakteristik eines zweiten Kanalspektrums an Kanälen von Trägersignalen aus dem zu wenigstens einem zweiten Analysezeitpunkt empfangenen Funksignal mittels der Empfangssignalspektrum-Analyseeinrichtung; und Registrieren des Funksignals als Störsignal in Abhängigkeit von dem ersten Analysewert und/oder dem zweiten Analysewert mittels der Registriereinrichtung, wenn wenigstens einer der Analysezeitpunkte in einem Störsignalzeitabschnitt liegt, in dem die Mehrheit der gemessenen Signalstärken einen vorgegebenen Signalstärke-Schwellwert überschreitet. Alle hierin beschriebenen Merkmale und Ausführungsformen der erfindungsgemäßen Vorrichtung sind entsprechend in dem erfindungsgemäßen Verfahren verwirklichbar.

Gemäß einem weiteren Aspekt der Erfindung ist ein System vorgesehen, welches die Vorrichtung und eine Bildaufnahmeeinrichtung aufweist. Gemäß diesem Aspekt ist die Vorrichtung ausgebildet, ein Kommunikationssignal zu erzeugen, welches von der Bildaufnahmeeinrichtung empfangen werden kann. Die Bildaufnahmeeinrichtung ist zudem ausgebildet, in Antwort auf das Kommunikationssignal ein Bild aufzunehmen oder aus mehreren aufgenommenen Bildern wenigstens ein Bild auszuwählen, dessen Aufnahmezeitpunkt innerhalb eines vorgegebenen zeitlichen Rahmens um den Empfangszeitpunkt des Kommunikationssignals oder eines mit dem Kommunikationssignal übermittelten Zeitwertes liegt. Die Bildaufnahmeeinrichtung wird also entweder durch das Kommunikationssignal getriggert, oder es werden von der Bildaufnahmeeinrichtung mehrere Bilder aufgenommen, und das Kommunikationssignal wird ausgewertet, um im Nachhinein das Bild auszuwählen, welches am wahrscheinlichsten Bilddaten eines Kraftfahrzeugs umfasst, welches eine zum registrierten Störsignal gehörende Störungsquelle mitführt. Die Bildaufnahmeeinrichtung ist bevorzugt eine Kamera. Die Kamera kann ausgebildet sein, Fotos zu machen. Alternativ oder zusätzlich ist sie vorzugsweise ausgelegt, Bildsequenzen oder Videosequenzen aufzunehmen.

Wie vorangehend erläutert, wird das Funksignal mittels der Registriereinrichtung in Abhängigkeit von dem ersten Analysewert und/oder dem zweiten Analysewert als Störsignal registriert. Hierzu findet in der Registriereinrichtung eine Auswertung der Analysewerte statt. Erfindungsgemäß ist die Registriereinrichtung ausgebildet, den ersten Analysewert mit dem zweiten Analysewert zu vergleichen und hieraus eine Kanalspektrumcharakteristik-Abweichung zu ermitteln, wobei das Funksignal als Störsignal registriert wird, wenn die Kanalspektrumcharakteristik-Abweichung eine vorgegebene Abweichungsschwelle überschreitet. Es wird also nach einem Unterschied in den mittels Analysieren des Funksignals zu den beiden unterschiedlichen Analysezeitpunkten ermittelten Kanalspektren gesucht. Dieser Unterschied spiegelt sich darin wieder, dass sich die beiden Analysewerte unterscheiden.

Je nachdem, was für eine Kanalspektrumcharakteristik der Auswertung zugrunde gelegt wird, können unterschiedliche Ausführungsformen realisiert werden, die nachfolgend nacheinander erläutert werden. Es sind jedoch auch Kombinationen dieser Ausführungsformen derart möglich, dass die Kanalspektrumcharakteristik, dessen Analysewerte zu den unterschiedlichen Analysezeitpunkten ermittelt werden, eine Kombination aus zwei oder mehr unterschiedlichen Kanalspektrumcharakteristiken ist.

Eine erste mögliche Kanalspektrumcharakteristik, welche gemäß einer bevorzugten Ausführungsform ausgewertet wird, ist eine Anzahl im Kanalspektrum enthaltener Kanäle. Ein Unterschied bzw. eine Kanalspektrumcharakteristik-Abweichung zwischen dem ersten Kanalspektrum und dem zweiten Kanalspektrum kann in diesem Fall darin bestehen, dass das erste Kanalspektrum eine andere Anzahl an bestimmten oder bestimmbaren Kanälen umfasst, als das zweite Kanalspektrum. Im Falle eines GNSS kann das beispielsweise die Anzahl an Satelliten sein, von denen Trägersignale bestimmt werden konnten. Abhängig von einer solchen Kanalspektrumcharakteristik-Abweichung kann eine Registrierung eines Störsignals durch die Registriereinrichtung erfolgen, wenn die Kanalspektrumcharakteristik-Abweichung in der Anzahl mehr als eine bestimmte Anzahl von Kanälen, beispielsweise mehr als zwei Kanäle, beträgt und/oder die bestimmte Anzahl von Kanälen des ersten oder des zweiten ermittelten Kanalspektrums kleiner als vier ist.

Eine zweite mögliche Kanalspektrumcharakteristik, welche gemäß einer bevorzugten Ausführungsform ausgewertet wird, ist die Kennzeichnung der bestimmten Kanäle im Kanalspektrum bzw. der im Kanalspektrum enthaltenen Kanäle. Ein Unterschied bzw. eine Kanalspektrumcharakteristik-Abweichung zwischen dem ersten Kanalspektrum und dem zweiten Kanalspektrum kann in diesem Fall darin bestehen, dass das erste Kanalspektrum andere Kanäle umfasst, als das zweite Kanalspektrum. Im Falle eines GNSS vertreten die Kanäle jene Satelliten, von denen Trägersignale bestimmt werden konnten. Abhängig von einer solchen Kanalspektrumcharakteristik-Abweichung kann eine Registrierung eines Störsignals durch die Registriereinrichtung erfolgen, das heißt, das Funksignal kann als Störsignal erkannt und registriert werden, wenn mehr als eine bestimmte Anzahl von Kanälen in dem ersten und dem zweiten Kanalspektrum voneinander verschieden sind, beispielsweise wenn sich bei gleichbleibender Anzahl ermittelter Kanäle des ersten und zweiten Kanalspektrums mehr als zwei Kanäle im ersten Kanalspektrum von den Kanälen im zweiten Kanalspektrum unterscheiden.

Eine dritte mögliche Kanalspektrumcharakteristik, welche gemäß einer bevorzugten Ausführungsform ausgewertet wird, ist eine Korrelationsgüte eines oder mehrerer Kanäle, die mittels eines Kanaldemultiplexing-Verfahrens erfasst wird. Insbesondere kann hier eine maximale oder mittlere Korrelationsgüte ermittelt werden, also der maximale Wert des Korrelationssignals oder der mittlere Wert des Korrelationssignals, der über einen bestimmten Zeitraum und/oder über die ermittelten Kanäle hinweg ermittelt wird. Eine Kanalspektrumcharakteristik-Abweichung zwischen dem ersten Kanalspektrum und dem zweiten Kanalspektrum kann in diesem Fall darin bestehen, dass das erste Kanalspektrum eine andere, beispielsweise eine höhere, über alle bestimmten Kanäle gemittelte, mittlere Korrelationsgüte aufweist, als das zweite Kanalspektrum. Abhängig von einer solchen Kanalspektrumcharakteristik-Abweichung kann eine Registrierung eines Störsignals durch die Registriereinrichtung erfolgen, wenn die Abweichung der ersten mittleren Korrelationsgüte des ersten Kanalspektrums von der zweiten mittleren Korrelationsgüte des zweiten Kanalspektrums mehr oder weniger als einen bestimmten Faktor beträgt, beispielsweise mehr als 2 oder weniger als 0,5.

Eine vierte mögliche Kanalspektrumcharakteristik, welche gemäß einer bevorzugten Ausführungsform ausgewertet wird, ist die Korrelationszeit, also eine zeitliche Lage des Maximums oder des Schwerpunktes des Korrelationssignals, eines oder mehrerer der im Kanalspektrum enthaltenen Kanäle. Die Korrelationszeit kann beispielsweise mittels eines Kanaldemultiplexing-Verfahrens ermittelt werden. Bei GNSS-Signalen, insbesondere GPS-Signalen, entspricht die ermittelte Korrelationszeit einer Pseudoentfernung des Empfängers von dem jeweiligen Satelliten. Eine Kanalspektrumcharakteristik-Abweichung zwischen dem ersten Kanalspektrum und dem zweiten Kanalspektrum kann in diesem Fall darin bestehen, dass das erste Kanalspektrum eine gegenüber dem zweiten Kanalspektrum versetzte zeitliche Lage des Schwerpunktes des Korrelationssignals aufweist. Abhängig von einer solchen Kanalspektrumcharakteristik-Abweichung kann eine Registrierung eines Störsignals durch die Registriereinrichtung erfolgen, wenn dieser zeitliche Versatz bei wenigstens einem Kanal größer als ein bestimmter Bruchteil eines Maßes für die Breite wenigstens eines der Korrelationssignale ist, zum Beispiel größer als 1% der Halbwertsbreite des Korrelationssignals des entsprechenden Kanals im ersten Kanalspektrum.

Eine fünfte mögliche Kanalspektrumcharakteristik, welche gemäß einer bevorzugten Ausführungsform ausgewertet wird, ist die Korrelationssignalbreite eines oder mehrerer der im Kanalspektrum enthaltenen Kanäle. Die Korrelationssignalbreiten können insbesondere mittels eines Kanaldemultiplexing-Verfahrens erfasst werden. Eine Kanalspektrumcharakteristik-Abweichung zwischen dem ersten Kanalspektrum und dem zweiten Kanalspektrum kann in diesem Fall darin bestehen, dass das erste Kanalspektrum bezüglich wenigstens eines Kanals eine gegenüber dem zweiten Kanalspektrum verschiedene Korrelationssignalbreite aufweist. Abhängig von einer solchen Kanalspektrumcharakteristik-Abweichung kann eine Registrierung eines Störsignals durch die Registriereinrichtung erfolgen, wenn die Abweichung der ersten Korrelationssignalbreite des ersten Kanalspektrums von der zweiten Korrelationssignalbreite bei wenigstens einem Kanal mehr oder weniger als einen bestimmten Faktor beträgt, beispielsweise mehr als 1,11 oder weniger als 0,91.

Vorteilhafterweise ist die Empfangssignalspektrum-Analyseeinrichtung ausgebildet, als Kanalspektrumcharakteristik jeweils eine Ermittelbarkeit des ersten Kanalspektrums und des zweiten Kanalspektrums mittels Analyse des empfangenen Funksignals festzustellen. In dieser Ausbildungsform ist die Registriereinrichtung ausgebildet, das Funksignal als Störsignal zu registrieren, wenn der erste Analysewert einer gegebenen Ermittelbarkeit des ersten Kanalspektrums in einem Zeitbereich außerhalb des Störsignalzeitabschnitts entspricht und der zweite Analysewert einer mangelnden Ermittelbarkeit des zweiten Kanalspektrums in einem Zeitbereich innerhalb des Störsignalzeitabschnitts entspricht. Das bedeutet, der erste Analysewert gibt wieder, dass das erste Kanalspektrum in einem Zeitbereich außerhalb des Störsignalzeitabschnitts ermittelbar ist, während der zweite Analysewert widergibt, dass das zweite Kanalspektrum in einem Zeitbereich innerhalb des Störsignalzeitabschnitts nicht ermittelbar ist. Der Unterschied zwischen den zu den verschiedenen Analysezeitpunkten ermittelten Kanalspektren, also die Kanalspektrumcharakteristik-Abweichung, kann also darin bestehen, dass einerseits zu dem ersten Analysezeitpunkt der Versuch der Bestimmung des Kanalspektrums erfolgreich ist, es wird also wenigstens ein Kanal identifiziert, und zu dem zweiten Analysezeitpunkt der Versuch der Bestimmung des Kanalspektrums misslingt, es wird also kein Kanal identifiziert. Dass kein Kanal identifiziert wird, deutet darauf hin, dass eine Positionsbestimmung mittels des Funksignals nicht erfolgreich wäre, was wiederum ein starkes Indiz dafür ist, dass ein Störsignal vorliegt, welches eine Positionsbestimmung beeinträchtigen kann. Zusammen mit der Feststellung, dass die Nichtermittelbarkeit des Kanalspektrums an einem Analysezeitpunkt vorliegt, welches innerhalb des Störsignalzeitabschnitts liegt, führt dies dazu, dass das Funksignal als Störsignal registriert wird.

Gemäß einer bevorzugten Ausführungsform ist die Empfangssignalstärke-Messeinrichtung ausgebildet, aus den gemessenen Signalstärken den Störsignalzeitabschnitt zu ermitteln, in dem die Mehrheit der gemessenen Signalstärken einen vorgegebenen Signalstärke-Schwellwert überschreitet, wobei die Vorrichtung ausgebildet ist, den ersten Analysezeitpunkt und/oder den zweiten Analysezeitpunkt innerhalb des ermittelten Störsignalzeitabschnitts zu wählen. Das bedeutet, dass zunächst der Störsignalzeitabschnitt ermittelt, beispielsweise errechnet, wird, und dass anschließend einer oder mehrere der Analysezeitpunkte innerhalb des Störsignalzeitabschnitts gewählt wird/werden. Alternativ könnten die Analysezeitpunkte zunächst unabhängig von einem Störsignalzeitabschnitt gewählt werden. In diesem Fall kann der Störsignalzeitabschnitt ermittelt und nachträglich diejenigen Analysewerte betrachtet werden, deren zugehörige Analysezeitpunkte in dem Störsignalzeitabschnitt liegt. Die Wahl des ersten Analysezeitpunktes bzw. des zweiten Analysezeitpunktes erfolgt in jedem Fall vorzugsweise durch die Empfangssignalspektrum-Analyseeinrichtung oder durch die Registriereinrichtung.

Zweckmäßigerweise ist die Empfangssignalspektrum-Analyseeinrichtung ausgebildet, das erste Kanalspektrum und das zweite Kanalspektrum mittels eines Kanaldemultiplexing-Verfahrens aus dem empfangenen Funksignal zu ermitteln. Hierdurch werden aus dem Funksignal mittels Kanaldemultiplexing mehrere Trägersignale gewonnen, die jeweils von einem anderen Kanal stammen. Bei einem GNSS-System stammt jedes Trägersignal von einer eigenen Signalquelle, beim GPS-System sendet jeder Satellit ein eigenes Trägersignal derselben Frequenz auf einem eigenen Kanal. Bei einer Positionsermittlung mittels eines Mobilfunkempfängers, beispielsweise mittels GSM-Ortung, kann eine von einer Funkzelle ausgesendete Kennung als Trägersignal verstanden werden. Die Zuordnung der Kennung zu der Funkzelle stellt in diesem Fall eine Zuordnung des Trägersignals zu dem Kanal dar. Als Kanaldemultiplexing-Verfahren kann, insbesondere bei GPS-basierter Positionsermittlung, das Code-Demultiplexingverfahren eingesetzt werden, um die Kanalspektren aus dem Funksignal zu ermitteln, weil das Funksignal eines GNSS-Systems ein Signal des CDMA (Code Division Multiple Access) ist.

Erfindungsgemäß sind die erste Messantenne und die Analyseantenne derart ausgerichtet und/oder ausgebildet, dass sie unterschiedliche räumliche Empfangsbereiche aufweisen. Dies bedeutet insbesondere, dass es sich um unterschiedliche Antennen handelt. Es können Antennen gleicher oder unterschiedlicher Bauart eingesetzt werden. Der Empfangsbereich bzw. Empfangsprofil einer Antenne ergibt sich aus seiner Richtcharakteristik sowie aus seiner Positionierung und Ausrichtung. Unterschiedliche Empfangsbereiche können durch unterschiedliche Ausrichtungen von Antennen mit gleichem Empfangsprofil und/oder durch gleiche Ausrichtung von Antennen mit unterschiedlichen Richtcharakteristiken ergeben. Bevorzugterweise sind die erste Messantenne und die Analyseantenne derart ausgerichtet und/oder ausgebildet, dass sich die Richtcharakteristiken der ersten Messantenne und der Analyseantenne in ihrer jeweiligen Hauptempfangsrichtung um nicht mehr als 30%, 40%, 50% oder 60% überlappen.

Wie vorangehend erläutert, sind die Messantennen und die Analyseantenne vorteilhafterweise oberhalb einer Straße installiert, vorzugsweise auf einer Trägervorrichtung wie einem Stativ am Straßenrand und/oder an einer die Straße überbrückenden Brücke oder Autobahnschildhalterung. Mittels der Messantenne soll die Empfangsstärke eines Funksignals ermittelt werden, um festzustellen, ob sie einen Schwellwert überschreitet und es sich somit um einen Kandidaten für ein Störsignal handelt. Es geht hier also darum, das potentielle Störsignal zu empfangen. Dieses Störsignal kommt im Allgemeinen von einem Fahrzeug, das sich auf der Straße befindet. Im Gegensatz dazu, dient die Analyseantenne dazu, das Funksignal dahingehend zu analysieren, dass eine Positionsbestimmung möglich wird. Es geht hier also darum, eines oder mehrere Trägersignale für die Positionsbestimmung zu empfangen. Diese kommen in der Regel von einem Satelliten oder einem Funkmast oberhalb der Straße. Die Signale, für welche die Messantenne und die Analyseantenne ausgelegt sind, kommen also üblicherweise von unterschiedlichen Richtungen. Wenn nun die beiden Antennen aufgrund ihrer Bauart und/oder Ausrichtung unterschiedliche räumliche Empfangsbereiche aufweisen, dann können die Empfangsbereiche jeweils für einen besseren Empfang optimiert werden.

Erfindungsgemäß weist die erste Messantenne kein himmelwärts, also von der Straße weg, gerichtetes räumliches Empfangsprofil auf. Die erste Messantenne weist erfindungsgemäß ein erstes räumliches Empfangsprofil auf, welches erdwärts, also auf die Straße, oder parallel zur Straßenoberfläche ausgerichtet ist. Demgegenüber weist die Analyseantenne erfindungsgemäß ein zweites räumliches Empfangsprofil auf, welches himmelwärts, also von der Straße weg, ausgerichtet ist. Dies bedeutet insbesondere, dass eine Hauptkeule der Richtcharakteristik der jeweiligen Antenne erdwärts bzw. himmelwärts gerichtet ist.

Gemäß einer bevorzugten Ausführungsform ist eine mit der Empfangssignalstärke-Messeinrichtung verbundene, an der Straße installierte zweite Messantenne vorgesehen, welche ausgebildet ist, innerhalb des Funksignalfrequenzbereiches ein Vergleichssignal zu empfangen, wobei die Empfangssignalstärke-Messeinrichtung ausgebildet ist, eine Vergleichssignalstärke des empfangenen Vergleichssignals zu messen. Hierbei ist die Vorrichtung ausgebildet ist, das Funksignal nur dann als Störsignal zu registrieren, wenn seine Signalstärke zumindest im Störsignalzeitabschnitt größer ist, als die Vergleichssignalstärke. Die Auswertung und/oder Berücksichtigung des Vergleichssignals bei der Registrierung des Störsignals kann in der Messeinrichtung und/oder in der Registriereinrichtung erfolgen. Das Vergleichssignal dient dazu, die Verlässlichkeit der Empfangssignalstärke-Messung zu erhöhen. Das Vergleichssignal kann separat ausgewertet werden, um ein eigenständiges zusätzliches Entscheidungskriterium dafür zu liefern, das Funksignal als Störsignal zu registrieren. Alternativ oder zusätzlich kann das Vergleichssignal mit dem Empfangssignal verrechnet werden, beispielsweise im Sinne einer Differenzbildung, um Hintergrundeinflüsse auf das Messergebnis zu verringern oder im Sinne einer Summenbildung um den zeitlichen Empfangsbereich durch mehr Messwerte zu vergrößern und/oder den räumlichen Empfangsbereich durch Messwerte aus anderen Richtungen zu vergrößern.

Wenn gemäß einer bevorzugten Ausführungsform die erste Messantenne kein himmelwärts, also von der Straße weg, gerichtetes räumliches Empfangsprofil aufweist, dann kann die zweite Messantenne ein himmelwärts gerichtetes räumliches Empfangsprofil aufweisen. Ferner kann eine Empfangssignalstärke-Vergleichseinrichtung vorgesehen sein, die eine erste gemessene Empfangssignalstärke des mittels der ersten Messantenne empfangenen Signalspektrums mit einer zweiten gemessenen Empfangssignalstärke des mittels der zweiten Messantenne empfangenen Signalspektrums vergleicht. In diesem Fall kann die Registriereinrichtung ausgebildet ist, einen Störsender abhängig von der Feststellung zu registrieren, dass die mittels der ersten Messantenne gemessene Empfangssignalstärke größer ist, als die mittels der zweiten Messantenne gemessene Empfangssignalstärke. Anders ausgedrückt, wird das Funksignal nur dann als Störsignal registriert, wenn es von der erdwärts gerichteten, ersten Messantenne besser empfangen wird, als von der himmelwärts gerichteten zweiten Messantenne. Es wird also wie vorangehend erläutert, davon ausgegangen, dass ein Störsignal von einem sich auf der Straße befindenden Fahrzeug ausgesendet wird. Damit kann also insbesondere die Anwesenheit eines Störsenders auf der Straße gegenüber der Anwesenheit eines Störsenders oberhalb der Straße unterschieden werden.

Gemäß einer vorteilhaften Ausführungsform ist eine mit der Registriereinrichtung verbundene Zähleinrichtung vorgesehen, welche ausgebildet ist, passierende Fahrzeuge zu erfassen und einen zeitabhängigen Verkehrsflusswert zu ermitteln. Die Registriereinrichtung ist hierbei ausgebildet, in Abhängigkeit von dem Verkehrsflusswert und von der Dauer des Störsignalzeitabschnitts, ein fahrzeuggebundenes Störsignal zu registrieren, das bedeutet, das Störsignal als ein fahrzeuggebundenes Störsignal zu registrieren. Anders ausgedrückt kann in diesem Fall das Störsignal einem Fahrzeug zugeordnet werden, weil das Auftreten des Störsignals mit dem Verkehrsfluss oder der Erfassung eines Fahrzeugs korreliert. Die Vorrichtung weist also eine Zähleinrichtung für die Erfassung und Zählung von Fahrzeugen auf, die ausgebildet ist, einen Verkehrsfluss von Fahrzeugen zu ermitteln, welche die Vorrichtung bzw. die Trägervorrichtung passieren, an der die Messantenne(n) und/oder die Analyseantenne befestigt sind. Die Registriereinrichtung ist in diesem Fall vorzugsweise ausgebildet, einen Wert oder Kehrwert des Verkehrsflusses aus der Störsignaldetektionsdauer von der Zähleinrichtung mit einem Wert oder Kehrwert der Störsignaldetektionsdauer zu vergleichen und einen Störsender abhängig von der Korrelation des Verkehrsflusses mit der Störsignaldetektionsdauer zu registrieren. Eine Korrelation des Verkehrsflusses mit der Störsignaldetektionsdauer ist bei einem hohen Verkehrsfluss, beispielsweise mehr als 20 und weniger als 50 Fahrzeugen pro Minute und Fahrstreifen, und bei relativ kurzen Störsignaldetektionsdauern, beispielsweise weniger als 10 Sekunden und mehr als 100 Millisekunden, gegeben. Keine Korrelation würde bei einer relativ langen Störsignaldetektionsdauer, beispielsweise mehr als zehn Sekunden, bei einem hohen Verkehrsfluss, beispielsweise mehr als 20 und weniger als 50 Fahrzeugen pro Minute und Fahrstreifen, vorliegen. Ferner liegt vorzugsweise keine Korrelation bei generell niedrigem Verkehrsfluss vor, beispielsweise bei weniger als 6 Fahrzeugen pro Minute. Die Störsignaldetektionsdauer ist hierbei als Dauer des Störsignalzeitabschnitts definiert, in dem die Mehrheit der gemessenen Signalstärken einen vorgegebenen Signalstärke-Schwellwert überschreitet.

Alternativ oder optional kann die Vorrichtung eine Erfassungseinrichtung für die Erfassung von die Trägervorrichtung bzw. die Vorrichtung passierenden Fahrzeugen aufweisen, die ausgebildet ist, einzelne Fahrzeugerfassungsereignisse in Form von Fahrzeugerfassungssignalen zu signalisieren. Die Registriereinrichtung ist in diesem Fall ausgebildet, Fahrzeugerfassungssignale zu empfangen und einen Störsender abhängig von der zeitlichen Korrelation eines Fahrzeugerfassungssignals mit einem Störsignal, dessen Signalstärke einen vorgegebenen Schwellwert überschreitet, zu registrieren. Beispielsweise kann die Registriereinrichtung ausgebildet sein, einen Störsender abhängig davon zu registrieren, dass ein Fahrzeugerfassungssignal aus dem Störsignalzeitabschnitt stammt. Diese alternative Ausführungsform, bei der eine Korrelation mit einzelnen Fahrzeugpassierereignissen betrachtet wird, bietet sich insbesondere für den Fall des niedrigen Verkehrsflusses an. Vereinfacht weist die Vorrichtung gemäß einer bevorzugten Ausführungsform eine mit der Registriereinrichtung verbundene Erfassungseinrichtung auf, welche ausgebildet ist, passierende Fahrzeuge zu wenigstens einem Erfassungszeitpunkt zu erfassen, wobei die Registriereinrichtung ausgebildet ist, ein fahrzeuggebundenes Störsignal zu registrieren, wenn der Erfassungszeitpunkt eines Fahrzeugs im Störsignalzeitabschnitt, liegt.

Vorzugsweise ist die Registriereinrichtung ausgebildet, als Reaktion auf die Registrierung eines Störsignals eine Störquellen-Registrierungsnachricht an eine straßenfern angeordnete Zentrale zu senden. Diese Störquellen-Registrierungsnachricht kann eine Anzahl von in einem bestimmten Zeitraum von beispielsweise einem Tag registrierten Störquellen umfassen. Hierbei kann es ausreichend sein, dass beispielsweise nur täglich eine Nachricht über die Anzahl der registrierten Störsignalen bzw. Störquellen gesendet werden muss. Die Registrierungseinrichtung kann ausgebildet sein, auch ohne die Registrierung eines Störsignals nach Ablauf einer vorgegeben Zeitdauer seit der letzten Übermittlung, zu einer bestimmten Uhrzeit oder auf Anforderung durch die Zentrale mittels einer Anforderungsnachricht an die Vorrichtung eine Statusnachricht an die Zentrale zu senden, die die Anzahl der seit der letzten Übermittlung registrierten Störsignale bzw. Störquellen umfasst, die auch Null sein kann.

Gemäß einer bevorzugten Ausführungsform ist die Empfangssignalspektrum-Analyseeinrichtung ausgebildet, wenigstens einen dritten Analysewert der Kanalspektrumcharakteristik eines dritten Kanalspektrums an Kanälen von Trägersignalen aus dem zu wenigstens einem dritten Analysezeitpunkt empfangenen Funksignal zu ermitteln. In diesem Fall ist die Vorrichtung ausgebildet, in Abhängigkeit von der Registrierung eines Störsignals und in Abhängigkeit von dem dritten Analysewert ein Kommunikationssignal zu erzeugen, wenn der dritte Analysezeitpunkt im Störsignalzeitabschnitt liegt. Das Kommunikationssignal kann dazu dienen, von einer Bildaufnahmeeinrichtung empfangen zu werden, welche auf die Straße gerichtet und beispielsweise ausgebildet ist, als Reaktion auf das Kommunikationssignal ein Bild aufzunehmen oder aus mehreren aufgenommenen Bildern wenigstens ein Bild auszuwählen, dessen Aufnahmezeitpunkt innerhalb eines vorgegebenen zeitlichen Rahmens um den Empfangszeitpunkt des Kommunikationssignals oder eines mit dem Kommunikationssignal übermittelten Zeitwertes liegt.

Jede der hier beschriebenen Prozesse, welche einem der drei Einrichtungen, nämlich der Empfangssignalspektrum-Analyseeinrichtung, der Empfangssignalstärke-Messeinrichtung und der Registriereinrichtung, zugeschrieben ist, kann zweckmäßigerweise auch von einem der beiden anderen oder von beiden anderen Einrichtungen durchgeführt werden. Beispielsweise kann die Empfangssignalstärke-Messeinrichtung ausgebildet sein, Messwerte der Signalstärke an die Registriereinrichtung zu senden, die ihrerseits ausgebildet ist, die Prüfung der Signalstärkemesswerte auf das Überschreiten des vorgegebenen Schwellwertes durchzuführen. Alternativ dazu kann aber die Empfangssignalstärke-Messeinrichtung ausgebildet sein, selbsttätig die Messwerte der Signalstärke auf das Überschreiten des vorgegebenen Schwellwertes zu prüfen und beispielsweise nur bei festgestelltem Überschreiten des vorgegebenen Schwellwertes ein entsprechendes Signal an die Registriereinrichtung zu senden. Analog kann die Empfangssignalspektrum-Analyseeinrichtung ausgebildet sein, eine Kanalspektrumcharakteristik repräsentierende Analysewerte des ersten Kanalspektrums und eine Kanalspektrumcharakteristik repräsentierende Analysewerte des zweiten Kanalspektrums an die Registriereinrichtung zu senden, die ihrerseits dazu ausgebildet ist, die Analysewerte des ersten Kanalspektrums auf eine Kanalspektrumcharakteristik-Abweichung bzw. einen Unterschied zu den Analysewerten des zweiten Kanalspektrums zu überprüfen. Alternativ dazu kann aber die Empfangssignalspektrum-Analyseeinrichtung ausgebildet sein, selbsttätig die Analysewerte des ersten Kanalspektrums auf einen Unterschied zu den Analysewerten des zweiten Kanalspektrums zu überprüfen und bei Feststellung einer hinreichenden Kanalspektrumcharakteristik-Abweichung zwischen den Analysewerten des ersten Kanalspektrums und den Analysewerten des zweiten Kanalspektrums ein entsprechendes Signal an die Registriereinrichtung zu senden.

Vorzugsweise sind die erste Messantenne und die zweite Messantenne jeweils als Stabantenne, insbesondere als Lambda/2-Stabantenne, und/oder als eine Richtantenne, beispielsweise eine Yagi-Uda-Antenne oder eine Logarithmisch-Periodische-Dipol-Antenne (log-periodic dipole antenna, auch als Logper-Antenne oder LPDA-Antenne bezeichnet) ausgebildet. Eine Yagi-Uda-Antenne ist eine Richtantenne zum Empfang oder zum Senden elektromagnetischer Wellen im Bereich von ca. 10 MHz bis ca. 2500 MHz. Sie weist einen Dipol, eine Reihe von parallel angeordneten Direktoren und optional einen Reflektor auf. Eine LPDA-Antenne ist eine Breitbandantenne, die eine Anzahl von Dipolantennen aufweist, deren Länge und Abstand zur Strahlungsrichtung hin abnehmen, sodass sie neben der Breitbandigkeit gleichzeitig eine Richtwirkung aufweist. Eine LPDA-Antenne weist den Vorteil der Breitbandigkeit gegenüber einer schmalbandigen Yagi-Uda-Antenne auf, aber der erzielbare Antennengewinn liegt unter dem einer gleich großen Yagi-Uda-Antenne.

Die azimutale Richtwirkung von Logper-Antennen dieses Beispiels oder von Yagi-Uda-Antennen ist von großem Vorteil bei der Störsignalerfassung, weil damit die Erfassung von Störsignalen auf Störquellen fokussiert werden kann, die sich aus / in einer bestimmten Richtung - insbesondere auf einer Fahrbahn, auf der die Bewegung der Störquelle näherungsweise auf die Dimension der Länge beschränkt ist - an die Vorrichtung nähert oder sich von ihr entfernt.

Der für die Ermittlung des Störsignalzeitabschnittes wesentliche Signalstärke-Schwellwert kann vorgegeben sein und beispielsweise auf Erfahrungswerten basieren. Optional oder zusätzlich kann der Signalstärke-Schwellwert während einer Kalibrierungsphase neu ermittelt werden, welche periodisch, beispielsweise die einmal täglich oder einmal stündlich, stattfinden kann. Bei der Kalibrierung wird der Signalstärke-Schwellwert vorzugsweise abhängig von einem gemessenen Signal-Rausch-Verhältnis im Signalspektrum eingestellt. Beispielsweise ist bei einem gleichen Signalstärkewert ein erster Signalstärke-Schwellwert für ein erstes Signal-Rausch-Verhältnis größer als ein zweiter Signalstärke-Schwellwert für ein zweites Signal-Rausch-Verhältnis, wenn das erste Signal-Rausch-Verhältnis kleiner ist als das zweite Signal-Rausch-Verhältnis.

Nachfolgend wird die Erfindung anhand von Ausführungsbeispielen näher erläutert. Hierbei zeigen
- Fig. 1a und 1b: Blockschaltdiagramme einer erfindungsgemäßen Vorrichtung in zwei unterschiedlichen Ausführungsbeispielen,
- Fig. 2a: eine schematische Draufsicht auf eine Straße mit einer am Straßenrand angeordneten erfindungsgemäßen Vorrichtung gemäß einer bevorzugten Ausführungsform,
- Fig. 2b und 2c: eine schematische Darstellungen von Richtcharakteristiken der in der Ausführungsform gemäß Fig. 2a eingesetzten Antennen,
- Fig. 3a: eine schematische Seitenansicht auf eine erfindungsgemäße Vorrichtung gemäß einer weiteren bevorzugten Ausführungsform,
- Fig. 3b: eine schematische Darstellungen von Richtcharakteristiken der in der Ausführungsform gemäß Fig. 3a eingesetzten Antennen,
- Fig. 4a: eine schematische Seitenansicht auf eine erfindungsgemäße Vorrichtung gemäß einer noch weiteren bevorzugten Ausführungsform,
- Fig. 4b: eine schematische Darstellungen von Richtcharakteristiken der in der Ausführungsform gemäß Fig. 4a eingesetzten Antennen, und
- Fig. 5a bis 5f: schematische Verläufe von Messwerten für die Signalstärke und Analysewerte gemäß unterschiedlichen Ausführungsformen des erfindungsgemäßen Verfahrens.

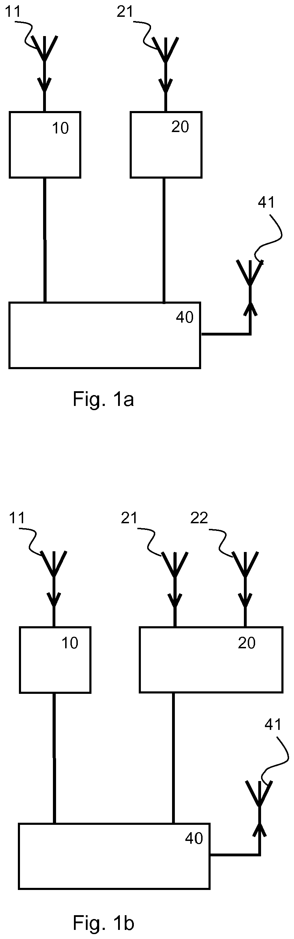

In der Fig. 1a ist ein Blockschaltdiagramm einer erfindungsgemäßen Vorrichtung zum Registrieren eines Störsignals dargestellt. Die Vorrichtung weist eine erste Messantenne 21 und eine Analyseantenne 11 auf. Die erste Messantenne 21 ist mit einer Empfangssignalstärke-Messeinrichtung 20 verbunden. Die erste Messantenne 21 empfängt ein Funksignal und leitet es weiter an die Empfangssignalstärke-Messeinrichtung 20, welche ausgebildet ist, zu mehreren zeitlich aufeinanderfolgenden Messzeitpunkten jeweils eine Signalstärke des empfangenen Funksignals zu messen. Die Analyseantenne 11 empfängt ebenfalls ein Funksignal und leitet dieses weiter an eine Empfangssignalspektrum-Analyseeinrichtung 10, mit der sie verbunden ist. In der Empfangssignalspektrum-Analyseeinrichtung 10 wird das empfangene Funksignal analysiert, ein Kanalspektrum an Kanälen von Trägersignalen ermittelt und aus dem ermittelten Kanalspektrum ein Analysewert für eine Kanalspektrumcharakteristik ermittelt. Diese Analyse wird zumindest an dem zu einem ersten Analysezeitpunkt empfangenen Funksignal und an dem zu einem zweiten Analysezeitpunkt empfangenen Funksignal vorgenommen, um entsprechend einen ersten Analysewert und einen zweiten Analysewert zu erhalten.

Mit der Empfangssignalstärke-Messeinrichtung 20 und der Empfangssignalspektrum-Analyseeinrichtung 10 verbunden ist eine Registriereinrichtung 40. Die Registriereinrichtung 40 ist ausgebildet, in Abhängigkeit von dem ersten Analysewert und/oder dem zweiten Analysewert das Funksignal als Störsignal zu registrieren, wenn wenigstens einer der Analysezeitpunkte in einem Störsignalzeitabschnitt liegt, in dem die Mehrheit der gemessenen Signalstärken einen vorgegebenen Signalstärke-Schwellwert überschreitet. Die Registriereinrichtung 40 ist zusätzlich mit einer Sendeantenne 41 ausgestattet, um über diese mit einer Zentraleinheit oder mit einer Bildaufnahmeeinrichtung zu kommunizieren. Letzteres beispielsweise um eine Bildaufnahme zu triggern, wenn die Vorbeifahrt eines einen Störsender mitführenden Fahrzeuges registriert wurde.

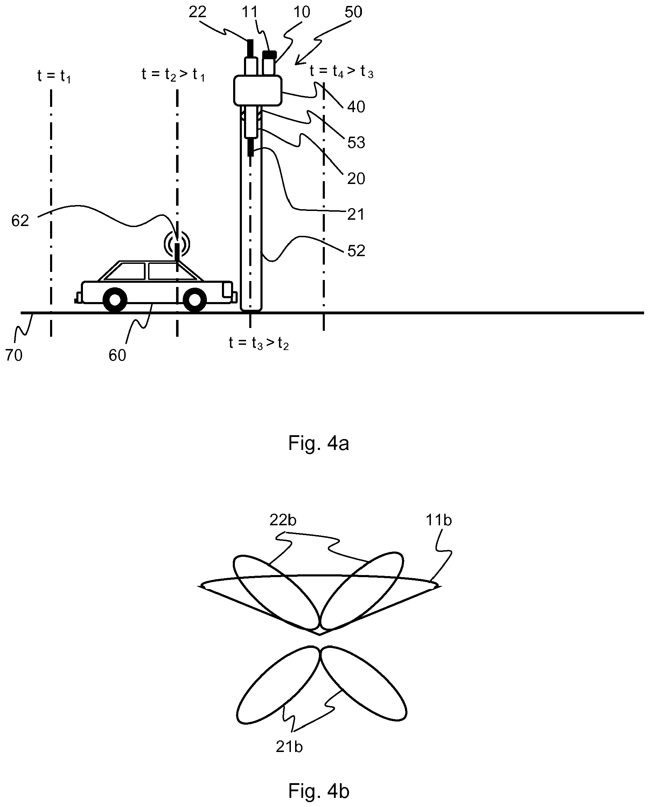

Das Blockschaltdiagramm einer erfindungsgemäßen Vorrichtung zum Registrieren eines Störsignals gemäß einer weiteren Ausführungsform wird in der Fig. 1b dargestellt. Diese unterscheidet sich von der in Fig. 1a dargestellten Vorrichtung dadurch, dass neben der ersten Messantenne 21 eine zweite Messantenne 22 mit der Empfangssignalstärke-Messeinrichtung 20 verbunden ist. Die zweite Messantenne 22 empfängt ein Vergleichssignal, von dem ebenfalls mittels der Empfangssignalstärke-Messeinrichtung 20 die Signalstärke(n) gemessen wird/werden. Die erste Messantenne 21 und die zweite Messantennen 22 weisen unterschiedliche räumliche Empfangsprofile bzw. räumliche Empfangsbereiche auf. Dies wird weiter unten anhand der Fig. 4b näher erläutert.

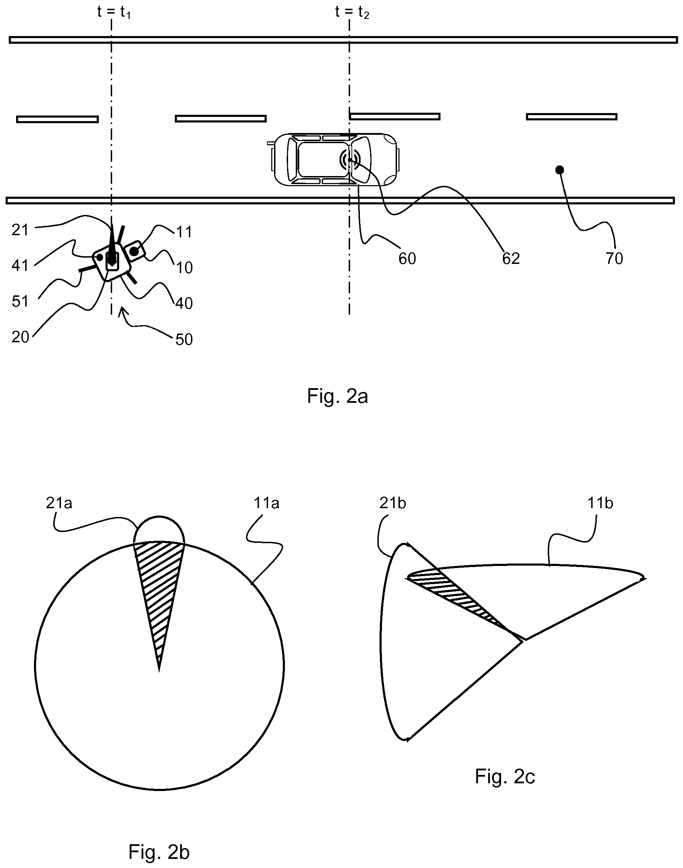

Eine Anordnung und Funktionsweise der erfindungsgemäßen Vorrichtung gemäß einer ersten Ausführungsform wird nachfolgend mit Bezug auf die Fig. 1a, Fig. 2a-b und Fig. 5a-5d erläutert. Die Situation an der Straße wird in der schematischen Zeichnung in der Fig. 2a gezeigt. Es handelt sich um eine Draufsicht auf eine Straße mit einer am Straßenrand angeordneten erfindungsgemäßen Vorrichtung 50 gemäß einer bevorzugten Ausführungsform. Auf der Straßenoberfläche 70 fährt ein Fahrzeug 60, welches einen Störsender 62 trägt. Der Störsender 62 sendet ein Störsignal aus, das geeignet ist, eine Positionsermittlungsfunktion eines im Fahrzeug 60 angeordneten Funksignalempfängers (in den Figuren nicht dargestellt) zu beeinträchtigen. Insbesondere handelt es sich bei dem Funksignalempfänger vorliegend um einen GPS-Empfänger. Auf einer neben der Straße angeordneten Trägervorrichtung, welche hier als Stativ 51 ausgebildet ist, ist die Registriereinrichtung 40 angeordnet, mit der die Empfangssignalstärke-Messeinrichtung 20 und die Empfangssignalspektrum-Analyseeinrichtung 10 verbunden sind. Diese sind in der Fig. 2a als separate Module eingezeichnet. Die Empfangssignalstärke-Messeinrichtung 20 und/oder die Empfangssignalspektrum-Analyseeinrichtung 10 können jedoch auch in der Registriereinrichtung 40 integriert sein bzw. ihre Funktionen können von der Registriereinrichtung 40 wahrgenommen werden.

Die erste Messantenne 21 ist mit der Empfangssignalstärke-Messeinrichtung 20 verbunden. Sie ist als LogPer-Antenne ausgebildet, welche parallel zur Straßenoberfläche 70 ausgerichtet ist. Die Analyseantenne 11 ist mit der Empfangssignalspektrum-Analyseeinrichtung 10 verbunden. Es handelt sich bei der Analyseantenne 11 um eine Planarantenne (auch Panel-Antenne genannt), welche mit einer oder mehreren patch-Antennen ausgebildet ist, wobei ihre Antennenebene parallel zur Straßenoberfläche ausgerichtet ist. Die räumlichen Empfangsprofile der ersten Messantenne 21 und der Analyseantenne 11 sind in den Fig. 2b und 2c dargestellt.

Wie auch bei den in nachfolgenden Figuren dargestellten Empfangsprofilen, werden in Fig. 2b die Richtcharakteristiken in einem Richtdiagramm oder Antennendiagramm entlang einer zur Straßenoberfläche parallelen, horizontalen Ebene in Polarkoordinaten dargestellt, wobei lediglich schematisch die Hauptkeulen der jeweiligen Richtcharakteristik eingezeichnet sind. Es können weitere Nebenkeulen vorhanden sein, die jedoch wenig Einfluss haben. Fig. 2b zeigt ein horizontales Empfangsprofil 11a der Analyseantenne 11 und ein horizontales Empfangsprofil 21a der ersten Messantenne 21. Ein Überlappbereich der beiden Empfangsprofile 11a, 21a ist schraffiert dargestellt. Während die Messantenne 21 ein fokussiertes, senkrecht zur Straßenoberfläche 70 gerichtetes Empfangsprofil 11a aufweist, hat die Analyseantenne 11 ein gleichmäßiges horizontales Empfangsprofil 11a über 360°. Das hat den Vorteil, dass die Messantenne 21 Funksignale bevorzugt aus der Richtung empfängt, aus der ein Störsignal zu erwarten ist, nämlich von der Straße. Zusätzlich kann mittels Messung eines zeitlichen Verlaufs der Signalstärke des empfangenen Funksignals die Position des Störsenders 62 beim Passieren der Vorrichtung ermittelt werden. Das im Vergleich zur Messantenne 21 weniger stark gerichtete Empfangsprofil 11a der Analyseantenne 11 hat wiederum den Vorteil, dass ein Empfang von Signalen von, vom Ort der Analyse ausgehend, über einen möglichst großen Himmelsauschnitt verteilten Satelliten möglich ist.

In der Fig. 2c werden ein vertikales Empfangsprofil 11b der Analyseantenne 11 und ein vertikales Empfangsprofil 21b der ersten Messantenne 21 in einer zur Straßenoberfläche und zur Fahrtrichtung des Fahrzeugs 60 senkrechten Ebene (vertikale Ebene) durch die Messantenne 21 dargestellt. Es ist erkennbar, dass die Analyseantenne 11 himmelwärts, also von der Straßenoberfläche 70 weg gerichtet ist. Auch dies unterstützt den Empfang des Satellitensignals. Andererseits ist die erste Messantenne 21 auch in der vertikalen Ebene zu Straße hin ausgerichtet, um das von dort erwartete Störsignal 62 besser zu empfangen.

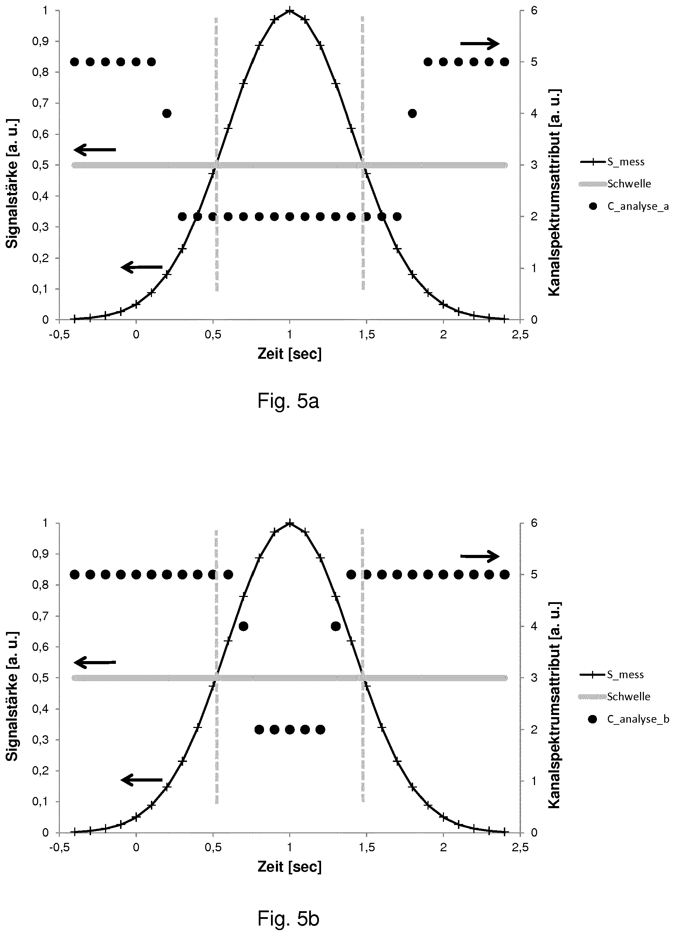

Beispielhafte Verläufe der mittels der Empfangssignalstärke-Messeinrichtung 20 ermittelten Signalstärke des von der ersten Messantenne 21 empfangenen Funksignals sowie der mittels der Empfangssignalspektrum-Analyseeinrichtung 10 ermittelten Analysewerte des von der Analyseantenne 11 empfangenen Funksignals sind in den Diagrammen der Fig. 5a bis 5d schematisch dargestellt. Die beiden y-Achsen (linke und rechte Ordinate, Hochachsen) weisen beliebige Einheiten auf. Entlang der x-Achse (Abszisse, Rechtsachse) ist die Zeit in Sekunden aufgetragen. Die Pluszeichen "+" und die sie verbindende Kurve stellen die (beispielsweise in Mikro-Watt) gemessenen Signalstärken dar, welche entlang der linken y-Achse aufgetragen sind. Die ausgefüllten Kreise stellen die aus den Kanalspektren ermittelten Analysewerte der Kanalspektrumcharakteristik dar, welche entlang der rechten y-Achse aufgetragen sind. Die rechte y-Achse ist in den Figuren mit Kanalspektrumsattribut tituliert. Wenn die Kanalspektrumcharakteristik durch einen numerischen Wert bestimmt werden kann, dann sind die Begriffe Kanalspektrumcharakteristik und Kanalspektrumsattribut synonym zu gebrauchen. Der Begriff der Kanalspektrumcharakteristik schließt darüber hinaus die Fälle ein, bei denen die Kanalspektrumcharakteristik nicht durch einen numerischen Wert bestimmt werden kann, beispielsweise wenn mittels Analyse des empfangenen Funksignals eine Nicht-Ermittelbarkeit des Kanalspektrums festgestellt wird.

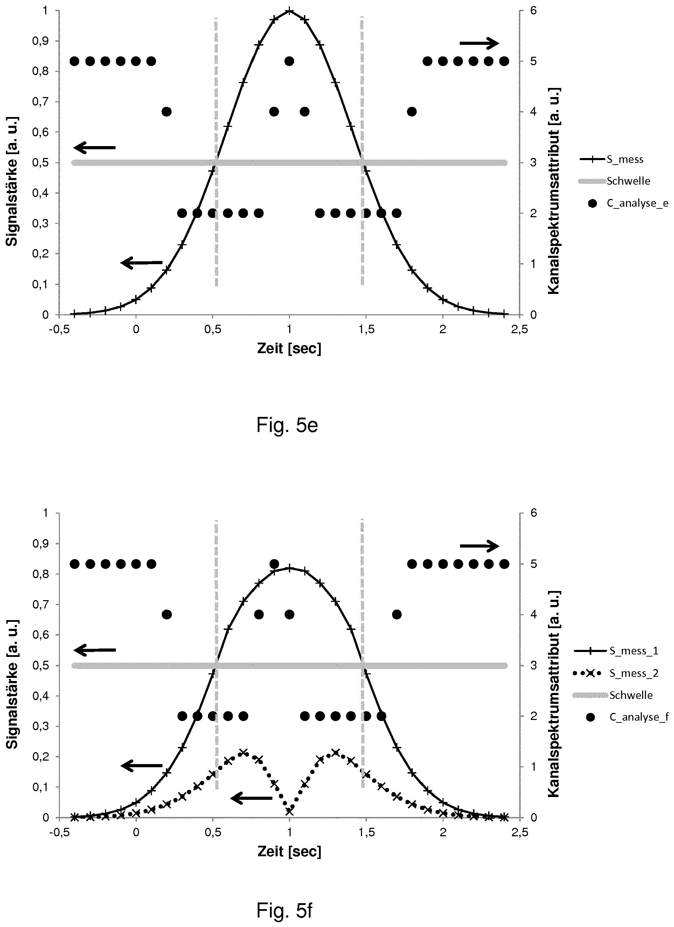

In den vorliegenden Fig. 5a bis 5d, und ebenfalls in den Fig. 5e und 5f, ist die Kanalspektrumcharakteristik entlang der rechten y-Achse eine Anzahl der bei der Analyse des Kanalspektrums ermittelten Kanäle entsprechend einer Anzahl der für die Empfangssignalspektrum-Analyseeinrichtung "sichtbaren" GNSS-Satelliten. Die Fig. 5a bis 5d zeigen die Verläufe der Signalstärke und des Analysewertes bei Vorbeifahrt des die Störquelle 62 mitführenden Fahrzeugs 60 an der Vorrichtung 50 vorbei. Die in Fig. 2a eingezeichnete strichgepunktete Linie t = t1 veranschaulicht die Position des Fahrzeugs 60 zum Zeitpunkt t1, welcher in den Fig. 5a bis 5d dem Zeitpunkt von 1 Sekunde entspricht. Dementsprechend gibt die in Fig. 2a dargestellte Situation die Position des Fahrzeugs zum Zeitpunkt t = t2 wieder, der in den Fig. 5a bis 5d einem späteren Zeitpunkt, beispielsweise von 2 Sekunden auf der x-Achse, entspricht.

Dass der ersten Analysewert der Kanalspektrumcharakteristik des ersten Kanalspektrums an Kanälen von Trägersignalen aus dem zu einem ersten Analysezeitpunkt empfangenen Funksignal ermittelt wird, bedeutet, dass jedem Analysezeitpunkt ein Analysewert zugeordnet werden kann. Aus der Fig. 5a kann herausgelesen werden, dass zu einem Analysezeitpunkt von beispielsweise 1 Sekunde mittels der Empfangssignalspektrum-Analyseeinrichtung ein Analysewert der Kanalspektrumcharakteristik von 2 ermittelt wurde.

Als erster Analysewert kann beispielsweise der Analysewert von 5 gelten, der zu einem ersten Analysezeitpunkt von beispielsweise 0 Sekunden ermittelt wurde, während als zweiter Analysewert beispielsweise der Analysewert von 2 gilt, der zu einem zweiten Analysezeitpunkt von 1 Sekunde ermittelt wurde. Der erste Analysewert kann also als ein Normalwert angenommen werden, der vorliegt, wenn keine Störquelle die Analyse des Funksignals beeinflusst. In diesem Fall beträgt die Kanalspektrumcharakteristik-Abweichung als Differenz wischen dem ersten und dem zweiten Analysewert: 5 - 2 = 3. Wenn eine Abweichungsschwelle von 2 vorgegeben wäre, dann würde in diesem Fall das Funksignal als Störsignal registriert, da die Kanalspektrumcharakteristik-Abweichung die vorgegebene Abweichungsschwelle überschreitet. Wie aus den Fig. 5a bis 5d erkennbar, werden beim Durchführen des erfindungsgemäßen Verfahrens vorzugsweise nicht nur zwei Analysewerte ermittelt, sondern es werden in zeitlichen Abständen fortlaufend Analysewerte ermittelt. In diesem Fall kann die Kanalspektrumcharakteristik-Abweichung aus der Differenz zwischen einem ersten Mittelwert von Analysewerten und einem zweiten Mittelwert von Analysewerten gebildet sein, wobei die Mittelwertbildung jeweils über unterschiedliche Zeitbereiche erfolgt.

Bei der Betrachtung des Signalstärkeverlaufs in den Fig. 5a bis 5d ist erkennbar, dass die gemessene Signalstärke des von der ersten Messantenne 21 empfangenen Funksignals zunächst von einem nicht messbaren oder sehr geringen Wert von nahe Null ansteigt und am Zeitpunkt t = 1 Sekunde (sec) einen Maximalwert erreicht. Danach fällt die gemessene Signalstärke wieder ab. Dies entspricht einem vor der Messantenne 21 vorbeifahrenden Fahrzeug 60 mit Störquelle 62. In den Fig. 5a bis 5d ist jeweils ein horizontaler Balken eingezeichnet, welcher den Signalstärke-Schwellwert von 0,5 repräsentiert. Alle gemessenen Signalstärken des mittels der ersten Messantenne 21 zwischen den Zeitpunkten von etwa 0,5 und 1,5 Sekunden empfangenen Funksignals überschreiten den vorgegebenen Signalstärke-Schwellwert. Somit kann der Zeitbereich zwischen diesen beiden Zeitpunkten als Störsignalzeitabschnitt definiert werden. Die beiden in jeder der Fig. 5a bis 5d eingezeichneten, vertikalen gestrichelten Linien stellen die Grenzen eines möglichen Störsignalzeitabschnittes dar. Es ist jedoch auch möglich, den Störsignalzeitabschnitt schmaler zu definieren, beispielsweise begrenzt durch die Zeitpunkte 0,8 und 1,2 Sekunden, weil die gemessenen Signalstärken auch in diesem Zeitbereich den vorgegebenen Signalstärke-Schwellwert überschreiten. Andererseits kann der Störsignalzeitabschnitt auch breiter definiert sein, beispielsweise zwischen den Zeitpunkten 0,4 und 1,6 Sekunden, weil zumindest eine Mehrzahl der gemessenen Signalstärken in diesem Zeitbereich den vorgegebenen Signalstärke-Schwellwert überschreitet. Der Störsignalzeitabschnitt kann auch nach links oder rechts hin verschoben und/oder nach links oder rechts hin vergrößert sein, solange sichergestellt ist, dass eine Mehrzahl der gemessenen Signalstärken innerhalb des Störsignalzeitabschnittes den vorgegebenen Signalstärke-Schwellwert überschreitet. Wenn als Störsignalzeitabschnitt derjenige Zeitbereich definiert wird, in dem alle gemessenen Signalstärken den Signalstärke-Schwellwert überschreiten, dann entspricht eine Verbreiterung des Störsignalzeitabschnittes einer Absenkung des Signalstärke-Schwellwertes, während umgekehrt eine Anhebung des Signalstärke-Schwellwertes zu einem schmaleren Störsignalzeitabschnitt führt, also zu einer geringeren Störsignaldetektionsdauer.

Aus den in Fig. 5a gezeigten Analysewerten lässt sich in Zusammenhang mit der Fig. 2a ablesen, dass der Analysewert zunächst bei 5 liegt. Dies kann einem Analysewert bei ungestörtem Funksignalempfang entsprechen, wenn die Störquelle 62 noch weit weg von der Vorrichtung 50 ist. Nähert sich das Fahrzeug 60 mit der Störquelle 62 der Vorrichtung 50 an und gerät die Störquelle 62 damit in den Empfangsbereich der der ersten Messantenne 21 und der Analyseantenne 11, so fällt der Analysewert ab - in diesem Beispiel, weil aufgrund der Störung durch die Störquelle 62 nun bei der Analyse des Funksignals weniger Kanäle ermittelt werden können. Zudem steigt die gemessene Signalstärke. Sowohl die Messung der Signalstärke, als auch die Analyse des Funksignals deuten also auf das Vorhandensein der Störquelle 62 hin. Da die Kanalspektrumcharakteristik-Abweichung die vorgegebene Abweichungsschwelle überschreitet und zumindest der zweite Analysezeitpunkt bei 1 Sekunde in dem Störsignalzeitabschnitt liegt, wird vorliegend das Funksignal korrekterweise als Störsignal registriert.

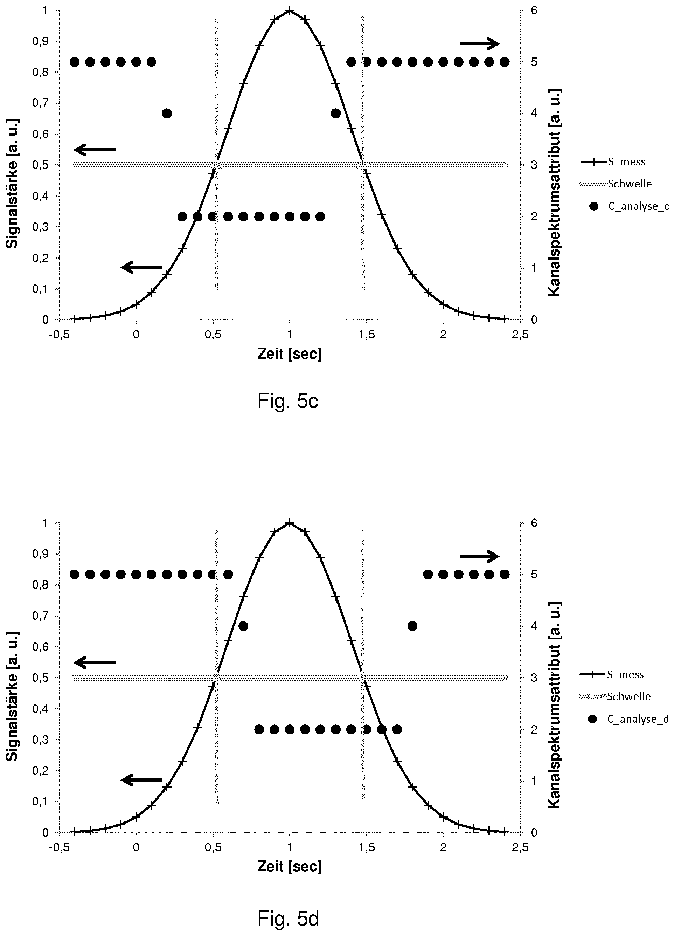

In dem in Fig. 5a dargestellten Fall, hat das Störsignal bereits frühzeitig einen Einfluss auf den Analysewert. Der ermittelte Analysewert verringert sich bereits bevor die Signalstärke den Signalstärke-Schwellwert überschritten hat. Dann wiederum steigt der Analysewert spät wieder auf seinen ursprünglichen Betrag, erst nachdem der Störsignalzeitabschnitt wieder verlassen wurde. Demgegenüber wird in der Fig. 5b ein Fall dargestellt, bei dem die Analysewerte nur im Störsignalzeitabschnitt den Normalbereich verlassen. Fig. 5c und 5d wiederum zeigen weitere mögliche Messergebnisse, die ebenfalls zu einer Registrierung des Funksignals als Störsignal führen können, da auch dort bei Betrachtung von zwei Analysewerten an zwei geeigneten Analysezeitpunkten, beispielsweise Zeitpunkte 0 Sekunden und 1 Sekunde, von denen einer (nämlich 1 Sekunde) im Störsignalzeitabschnitt liegt, die Kanalspektrumcharakteristik-Abweichung die vorgegebene Abweichungsschwelle von 2 überschreitet.

Wie aus den Fig. 5a bis 5f ersichtlich, sind die Messzeitpunkte, zu denen die Empfangssignalstärke-Messeinrichtung 20 die Signalstärke des Funksignals misst, einfach-periodisch. Vorzugsweise sind die Messzeitpunkte jedoch mehrfach-periodisch oder zufällig. Auch die Analysezeitpunkte können einfach-periodisch, mehrfach-periodisch oder zufällig sein. Ferner können zu den Messzeitpunkten jeweils ein Signalstärke-Messwert als ein Mittelwert mehrerer Signalstärkemessungen zu um den jeweiligen Messzeitpunkt gestreuten Messungen oder als ein integrierter Signalstärke-Messwert eines sich über den jeweiligen Messzeitpunkt erstreckenden zeitlichen Signalstärkeverlaufes gemessen werden.

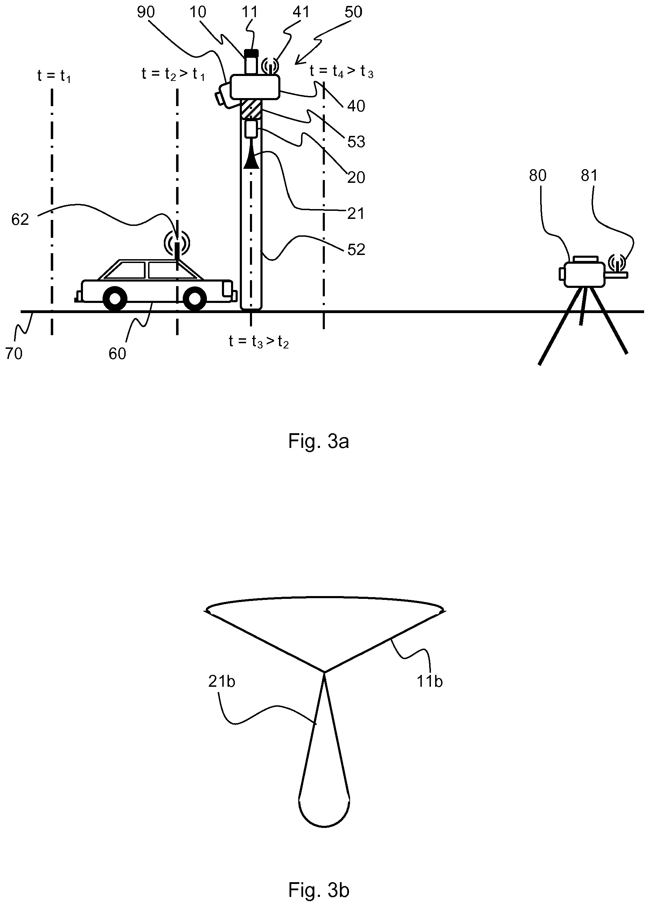

Eine Anordnung und Funktionsweise der erfindungsgemäßen Vorrichtung gemäß einer zweiten Ausführungsform wird nachfolgend mit Bezug auf Fig. 3a-b und Fig. 5e erläutert. Die Fig. 3a zeigt eine schematische Seitenansicht auf eine erfindungsgemäße Vorrichtung 50, die ebenfalls eine Empfangssignalspektrum-Analyseeinrichtung 10, eine Empfangssignalstärke-Messeinrichtung 20 und eine Registriereinrichtung 40 aufweist. Diese sind miteinander verbunden und an einem horizontalen Träger bzw. Querträger 53 befestigt. Der Querträger 53 wird von vertikalen Trägern bzw. Pfosten 52 getragen. Querträger 53 und Pfosten 52 bilden zusammen eine als Trägervorrichtung dienende Kontrollbrücke, welche die Fahrbahn überspannt, so dass die Vorrichtung 50 über der Straßenoberfläche 70 angeordnet ist.

Die erste Messantenne 21 ist als Hornantenne ausgebildet, unterhalb des die Straße überspannenden Querträgers 53 angeordnet und erdwärts gerichtet. Die Analyseantenne 11 ist eine GPS-Planarantenne, welche oberhalb des Querträgers 53 angeordnet und himmelwärts gerichtet. Das vertikale Empfangsprofil 11b der Analyseantenne 11 und das vertikale Empfangsprofils 21b der Messantenne 21 sind in der Fig. 3b schematisch dargestellt. Die Sendeantenne 41 der Vorrichtung 50 dient dazu ein Aktivierungssignal bzw. Triggersignal an eine Kameravorrichtung 80 zu senden, welche in Fahrtrichtung von der Vorrichtung 50 entfernt auf einem Stativ am Straßenrand angeordnet ist. Die Kameravorrichtung 80 weist selbst eine Empfangsantenne 81 auf, um das Aktivierungssignal zu empfangen und als Reaktion darauf eine Bildaufnahme des herannahenden Fahrzeugs 60 zu machen, auf der das die Störquelle 62 mitführende Fahrzeug 60 erkennbar ist. Das Aktivierungssignal kann beispielsweise über Funk, insbesondere mittels WLAN übertragen werden.

Die in Fig. 3a gezeigte Vorrichtung 50 weist eine Fahrzeugerfassungs- und Zähleinrichtung 30 auf. Die Fahrzeugerfassungs- und Zähleinrichtung 30 kann zum einen Fahrzeuge erfassen, welche die Trägervorrichtung 52, 53 passieren. Wenn ein Fahrzeug erfasst wird, dann erzeugt die Fahrzeugerfassungs- und Zähleinrichtung 30 ein Fahrzeugerfassungssignal. Die Registriereinrichtung 40 kann dieses Fahrzeugerfassungssignal empfangen und bei der Registrierung des Störsignals mit berücksichtigen. Beispielsweise kann die Registriereinrichtung das Störsignal abhängig davon registrieren, dass das Fahrzeugerfassungssignal aus dem Störsignalzeitabschnitt stammt. Zum anderen kann die Fahrzeugerfassungs- und Zähleinrichtung 30 passierende Fahrzeuge zählen und so einen zeitabhängigen Verkehrsflusswert ermitteln. Die Registriereinrichtung kann in diesem Fall in Abhängigkeit von dem Verkehrsflusswert und von der Dauer des Störsignalzeitabschnitts das Störsignal als ein fahrzeuggebundenes Störsignal registrieren. Mittels einer solchen Fahrzeugerfassungs- und Zähleinrichtung 30 kann sichergestellt werden, dass ein Registrieren des Störsignals immer mit dem Verkehrsfluss oder der Erfassung eines Fahrzeugs korreliert. Anstelle der Fahrzeugerfassungs- und Zähleinrichtung 30 kann auch nur eine Fahrzeugerfassungseinrichtung oder nur eine Zähleinrichtung vorgesehen sein, oder es können eine Fahrzeugerfassungseinrichtung und eine Zähleinrichtung vorgesehen sein, die jedoch voneinander getrennt angeordnet sind.

Das Diagramm in der Fig. 5e gibt ähnlich wie in den Fig. 5a bis 5d, den Verlauf der gemessenen Signalstärke ("+"-Zeichen und durchgehende Linie) und der Kanalspektrumcharakteristik wieder. Der Signalstärkeverlauf ist dem der aus der Fig. 5a bekannten ähnlich. Der Verlauf der Kanalspektrumcharakteristik unterscheidet sich jedoch von dem aus Fig. 5a bekannten Verlauf dadurch, dass die Kanalspektrumcharakteristik zum Zeitpunkt 1 Sekunde wieder den vor dem Eintreffen der Störquelle 62 vorliegenden Normalwert einnimmt. Der Zeitpunkt 1 Sekunde entspricht in der Fig. 3a einer Position des Störsenders 62 genau unterhalb der Vorrichtung 50, also zum Zeitpunkt t = t3. Hier wird die oberhalb des Querträgers 53 angeordnete und himmelwärts ausgerichtete Analyseantenne 11 gegenüber der Störquelle 62 abgeschattet. Damit verliert das Störsignal der Störquelle 62 kurzzeitig seinen störenden Einfluss auf die Analyseantenne 11, die nun das ungestörte Satellitensignal empfängt, welches von der Empfangssignalspektrum-Analyseeinrichtung 10 mit dem Ergebnis der vollen Sichtbarkeit aller im Himmelsausschnitt am Ort der Kontrollbrücke stehenden Satelliten analysiert werden kann. Diese Abschattung kann zusätzlich als Nachweis dafür dienen, dass die Störquelle 62 sich unter dem Querträger 53 hindurch bewegt hat und somit auf der Straße, also erdwärts, lokalisiert ist und nicht oberhalb des Trägers, also himmelwärts.

Die Registriereinrichtung ist ausgebildet, bei Wiedererlangung eines außerhalb des Störsignalzeitabschnittes als ungestörter Wert der Kanalspektrumcharakteristik bestimmten Wertes der Kanalspektrumcharakteristik innerhalb des Störsignalzeitabschnittes, nachdem sie im besagten Störsignalzeitabschnitt bereits erfindungsgemäß ein Störsignal registriert hat, das Aktivierungssignal an die Kameraeinrichtung 80 zu senden, die ausgerichtet ist, ein Fahrzeug aufzunehmen, das gerade die Kontrollbrücke passiert.

In der Fig. 3a sind weitere strichgepunktete Linien dargestellt, welche die Position der Störquelle 62 jeweils zu gegebenen Zeitpunkten zeigen. Der Zeitpunkt t = t3 entspricht im Diagramm der Fig. 5e dem Zeitpunkt 1 Sekunde. Die Zeitpunkte t = t2 und t = t4 entsprechen im Diagramm der Fig. 5e den Zeitpunkten 0,5 Sekunden bzw. 1,5 Sekunden. Schließlich entspricht der Zeitpunkt t = t1 einem Zeitpunkt vor 0,5 Sekunden, beispielsweise 0 Sekunden. Diese Zeitentsprechungen gelten auf zwischen den Fig. 4a und 5f.

Eine Anordnung und Funktionsweise der erfindungsgemäßen Vorrichtung gemäß einer dritten Ausführungsform wird nachfolgend mit Bezug auf die Fig. 1b, Fig. 4a-4b, Fig. 5f erläutert. Auch hier ist die Vorrichtung 50 an einem Querträger 53 befestigt. Ebenso wie im Falle der Fig. 3a ist die Analyseantenne 1 oberhalb des Querträgers 53 angeordnet, so dass der gleiche Abschattungseffekt wie oben beschrieben auch in der Fig. 5f auftritt, in der die Messergebnisse aus dem mittels der Vorrichtung 50 aus Fig. 4a durchgeführten Verfahren stammen.

Anders als im Fall der Fig. 3a, wird in der Ausführungsform gemäß Fig. 4a nicht die Vorrichtung 50 aus Fig. 1a verwendet, sondern die Vorrichtung 50 aus Fig. 1b. Diese weist neben der ersten Messantenne 21 eine weitere Messantenne 22 auf. Die zweite Messantenne 22 ist ausgebildet, ein Vergleichssignal zu empfangen und zum Messen seiner Signalstärke an die Empfangssignalstärke-Messeinrichtung 20 zu leiten. Die erste Messantenne 21 ist als Lambda/2-Stabantenne ausbildet und weist eine Abschirmung gegen den Empfang von himmelwärts lokalisierten Störsendern auf. Sie ist unterhalb des Querträgers 53 angeordnet. Damit besitzt die erste Messantenne 21 ein Empfangsprofil, das erdwärts ausgerichtet ist und im Wesentlichen nur erdwärts lokalisierte Störsender detektiert. Allerdings können Signale sehr starker, erdnah himmelwärts lokalisierter Störsender aufgrund einer nicht vollständigen Abschirmung auch von der ersten Messantenne 21 empfangen werden. Deshalb ist in dieser Ausführungsform eine zweite Messantenne 22 vorgesehen, die ebenfalls als Lambda/2-Stabantenne ausgebildet ist und eine Abschirmung gegen den Empfang von erdwärts lokalisierten Störsendern aufweist. Diese zweite Messantenne 22 ist oberhalb des Querträgers 53 angeordnet. Damit besitzt die zweite Messantenne 22 ein Empfangsprofil, das himmelwärts ausgerichtet ist und im Wesentlichen nur himmelwärts lokalisierte Störsender detektiert.

Das vertikale Empfangsprofil 21b der ersten Messantenne 21 und das vertikale Empfangsprofil 22b der zweiten Messantenne 22 sind zusammen mit dem vertikalen Empfangsprofil 11b der Analyseantenne 11 in der Fig. 4b schematisch dargestellt. In dem Diagramm der Fig. 5f ist zusätzlich zu dem Verlauf der Signalstärke des mittels der ersten Messantenne 21 gemessenen Funksignals, welcher mittels "+"-Zeichen aufgetragen ist, der Verlauf der Signalstärke des mittels der zweiten Messantenne 22 gemessenen Funksignals mittels "x"-Zeichen (Kreuzen) eingezeichnet, durch die eine gepunktete Linie führt. Weil die zweite Messantenne 22 himmelwärts ausgerichtet ist, weist das von ihr empfangene Funksignal eine geringere Signalstärke auf. Zudem findet ähnlich wie bei der Analyseantenne 11 aufgrund des Querträgers 53 eine Abschattung gegenüber der Störquelle 62 statt, wenn das Fahrzeug 60 unterhalb des Querträgers 53 die Vorrichtung 50 passiert. Dies erkennt man daran, dass die Signalstärke des von der zweiten Messantenne 22 empfangenen Funksignals im Bereich des Zeitpunktes 1 Sekunde, was dem Zeitpunkt t = t3 in Fig. 4a entspricht, einbricht.

Die Signalstärken der von der ersten Messantenne 21 und zweiten Messantenne 22 empfangenen Funksignale werden gemessen und dann miteinander verglichen, wenn die Signalstärke wenigstens einer Messung einen Signalstärke-Schwellwert überschreitet. Für die beiden Messantennen 21, 22 können unterschiedliche Signalstärke-Schwellwerte gewählt sein. Ist die Signalstärke des mittels der ersten Messantenne 21 empfangenen Funksignals größer, als die Signalstärke des mittels der zweiten Messantenne 22 empfangenen Funksignals, oder ist das Verhältnis der Signalstärke des mittels der ersten Messantenne 21 empfangenen Funksignals zu der Signalstärke des mittels der zweiten Messantenne 22 empfangenen Funksignals größer als ein vorbestimmtes Grenzverhältnis, wird auf eine straßenseitige Signalquelle geschlossen und ein entsprechendes Detektionssignal von der Empfangssignalstärke-Messeinrichtung 20 an die Registriereinrichtung 40 ausgegeben. Ist die Signalstärke des mittels der ersten Messantenne 21 empfangenen Funksignals kleiner als die Signalstärke des mittels der zweiten Messantenne 22 empfangenen Funksignals, oder ist das Verhältnis der Signalstärke des mittels der ersten Messantenne 21 empfangenen Funksignals zu der Signalstärke des mittels der zweiten Messantenne 22 empfangenen Funksignals kleiner als das vorbestimmte Grenzverhältnis, wird auf eine himmelseitige Signalquelle geschlossen, und es wird kein Detektionssignal von der Empfangssignalstärke-Messeinrichtung 20 an die Registriereinrichtung 40 ausgegeben. Die Registriereinrichtung 40 kann daraufhin das Detektionssignal derart berücksichtigen, dass das Funksignal nur dann als Störsignal registriert wird, wenn ein Detektionssignal vorliegt.

### Bezugszeichenliste:

- 10: Empfangssignalspektrum-Analyseeinrichtung
- 11: Analyseantenne
- 11a: horizontales Empfangsprofil der Analyseantenne
- 11b: vertikales Empfangsprofil der Analyseantenne
- 20: Empfangssignalstärke-Messeinrichtung
- 21: erste Messantenne
- 21a: horizontales Empfangsprofil der ersten Messantenne
- 21b: vertikales Empfangsprofil der ersten Messantenne
- 22: zweite Messantenne
- 22b: vertikales Empfangsprofil der zweiten Messantenne
- 30: Fahrzeugerfassungs- und Zähleinrichtung
- 40: Registriereinrichtung
- 41: Sendeantenne
- 50: Vorrichtung
- 51: Stativ
- 52: Pfosten
- 53: Querträger
- 60: Fahrzeug
- 62: Störquelle
- 70: Straßenoberfläche
- 80: Kameravorrichtung
- 81: Empfangsantenne

## Patentansprüche

1. Vorrichtung zum Registrieren eines Störsignals, das geeignet ist, eine Positionsermittlungsfunktion eines Funksignalempfängers, insbesondere eines Mobilfunkempfängers oder eines Empfängers eines Globales Navigationssatelliten-Systems, zu beeinträchtigen, aufweisend:
- eine Empfangssignalstärke-Messeinrichtung (20) mit einer hiermit verbundenen, an einer Straße installierten ersten Messantenne (21), welche ausgebildet ist, innerhalb eines Funksignalfrequenzbereiches ein Funksignal zu empfangen, und ein erstes räumliches Empfangsprofil aufweist, welches erdwärts auf die Straße oder parallel zur Straßenoberfläche ausgerichtet ist, wobei die Empfangssignalstärke-Messeinrichtung (20) ausgebildet ist, zu mehreren zeitlich aufeinanderfolgenden Messzeitpunkten jeweils eine Signalstärke des empfangenen Funksignals zu messen;
- eine Empfangssignalspektrum-Analyseeinrichtung (10) mit einer hiermit verbundenen, an der Straße installierten Analyseantenne (11), welche ausgebildet ist, innerhalb des Funksignalfrequenzbereiches das Funksignal zu empfangen, und ein zweites räumliches Empfangsprofil aufweist, welches himmelwärts von der Straße weg ausgerichtet ist, wobei die Empfangssignalspektrum-Analyseeinrichtung (10) ausgebildet ist, einen ersten Analysewert einer Kanalspektrumcharakteristik eines ersten Kanalspektrums an Kanälen von Trägersignalen aus dem zu einem ersten Analysezeitpunkt empfangenen Funksignal zu ermitteln und wenigstens einen zweiten Analysewert der Kanalspektrumcharakteristik eines zweiten Kanalspektrums an Kanälen von Trägersignalen aus dem zu wenigstens einem zweiten Analysezeitpunkt empfangenen Funksignal zu ermitteln; und
- eine mit der Empfangssignalstärke-Messeinrichtung (20) und der Empfangssignalspektrum-Analyseeinrichtung (10) verbundene Registriereinrichtung (40), welche ausgebildet ist, den ersten Analysewert mit dem zweiten Analysewert zu vergleichen und hieraus eine Kanalspektrumcharakteristik-Abweichung zu ermitteln und in Abhängigkeit von dem ersten Analysewert und dem zweiten Analysewert das Funksignal als Störsignal zu registrieren, wenn wenigstens einer der Analysezeitpunkte in einem Störsignalzeitabschnitt liegt, in dem die Mehrheit der gemessenen Signalstärken einen vorgegebenen Signalstärke-Schwellwert überschreitet, und die Kanalspektrumcharakteristik-Abweichung eine vorgegebene Abweichungsschwelle überschreitet.

2. Vorrichtung nach Anspruch 1, **dadurch gekennzeichnet, dass** die Kanalspektrumcharakteristik eine Anzahl an im Kanalspektrum enthaltenen Kanälen, eine Kennzeichnung der im Kanalspektrum enthaltenen Kanäle, eine Korrelationsgüte der im Kanalspektrum enthaltenen Kanälen, eine Korrelationszeit eines oder mehrerer der im Kanalspektrum enthaltenen Kanäle und/oder eine Korrelationssignalbreite eines oder mehrerer der im Kanalspektrum enthaltenen Kanäle ist.

3. Vorrichtung nach Anspruch 1, **dadurch gekennzeichnet, dass** die Empfangssignalspektrum-Analyseeinrichtung ausgebildet ist, als Kanalspektrumcharakteristik jeweils eine Ermittelbarkeit des ersten Kanalspektrums und des zweiten Kanalspektrums mittels Analyse des empfangenen Funksignals festzustellen, und die Registriereinrichtung ausgebildet ist, das Funksignal als Störsignal zu registrieren, wenn der erste Analysewert einer gegebenen Ermittelbarkeit des ersten Kanalspektrums in einem Zeitbereich außerhalb des Bezugszeitabschnitts entspricht und der zweite Analysewert einer mangelnden Ermittelbarkeit des zweiten Kanalspektrums in einem Zeitbereich innerhalb des Störsignalzeitabschnitts entspricht.

4. Vorrichtung nach einem der vorangehenden Ansprüche, **dadurch gekennzeichnet, dass** die Empfangssignalstärke-Messeinrichtung ausgebildet ist, aus den gemessenen Signalstärken den Störsignalzeitabschnitt zu ermitteln, in dem die Mehrheit der gemessenen Signalstärken einen vorgegebenen Signalstärke-Schwellwert überschreitet, wobei die Vorrichtung ausgebildet ist, den ersten Analysezeitpunkt und/oder den zweiten Analysezeitpunkt innerhalb des ermittelten Störsignalzeitabschnitts zu wählen.

5. Vorrichtung nach einem der vorangehenden Ansprüche, **dadurch gekennzeichnet, dass** die Empfangssignalspektrum-Analyseeinrichtung ausgebildet ist, das erste Kanalspektrum und das zweite Kanalspektrum mittels eines Kanaldemultiplexing-Verfahrens aus dem empfangenen Funksignal zu ermitteln.

6. Vorrichtung nach einem der vorangehenden Ansprüche, **gekennzeichnet durch** eine mit der Empfangssignalstärke-Messeinrichtung verbundene, an der Straße installierte zweite Messantenne, welche ausgebildet ist, innerhalb des Funksignalfrequenzbereiches ein Vergleichssignal zu empfangen, wobei die Empfangssignalstärke-Messeinrichtung ausgebildet ist, eine Vergleichssignalstärke des empfangenen Vergleichssignals zu messen, und die Vorrichtung ausgebildet ist, das Funksignal nur dann als Störsignal zu registrieren, wenn seine Signalstärke größer ist, als die Vergleichssignalstärke.

7. Vorrichtung nach einem der vorangehenden Ansprüche, **gekennzeichnet durch** eine mit der Registriereinrichtung verbundene Zähleinrichtung, welche ausgebildet ist, passierende Fahrzeuge zu erfassen und einen zeitabhängigen Verkehrsflusswert zu ermitteln, wobei die Registriereinrichtung ausgebildet ist, in Abhängigkeit von dem Verkehrsflusswert und von der Dauer des Störsignalzeitabschnitts, ein fahrzeuggebundenes Störsignal zu registrieren.

8. Vorrichtung nach einem der vorangehenden Ansprüche, **gekennzeichnet durch** eine mit der Registriereinrichtung verbundene Erfassungseinrichtung, welche ausgebildet ist, passierende Fahrzeuge zu wenigstens einem Erfassungszeitpunkt zu erfassen, wobei die Registriereinrichtung ausgebildet ist, ein fahrzeuggebundenes Störsignal zu registrieren, wenn der Erfassungszeitpunkt eines Fahrzeugs im Störsignalzeitabschnitt, liegt.

9. Vorrichtung nach einem der vorangehenden Ansprüche, **dadurch gekennzeichnet, dass**
- die Empfangssignalspektrum-Analyseeinrichtung ausgebildet ist, wenigstens einen dritten Analysewert der Kanalspektrumcharakteristik eines dritten Kanalspektrums an Kanälen von Trägersignalen aus dem zu wenigstens einem dritten Analysezeitpunkt empfangenen Funksignal zu ermitteln und
- die Vorrichtung ausgebildet ist, in Abhängigkeit von der Registrierung eines Störsignals und in Abhängigkeit von dem dritten Analysewert ein Kommunikationssignal zu erzeugen, wenn der dritte Analysezeitpunkt im Störsignalzeitabschnitt liegt.

10. System mit einer Vorrichtung nach Anspruch 9 und einer Bildaufnahmeeinrichtung, die ausgebildet ist, das Kommunikationssignal der Vorrichtung zu empfangen und in Antwort auf das Kommunikationssignal ein Bild aufzunehmen oder aus mehreren aufgenommenen Bildern wenigstens ein Bild auszuwählen, dessen Aufnahmezeitpunkt innerhalb eines vorgegebenen zeitlichen Rahmens um den Empfangszeitpunkt des Kommunikationssignals oder eines mit dem Kommunikationssignal übermittelten Zeitwertes liegt.

11. Verfahren zum Registrieren eines Störsignals, das geeignet ist, eine Positionsermittlungsfunktion eines Funksignalempfängers, insbesondere eines Mobilfunkempfängers oder eines Empfängers eines Globales Navigationssatelliten-Systems, zu beeinträchtigen, mittels einer Empfangssignalstärke-Messeinrichtung mit einer hiermit verbundenen, an einer Straße installierten ersten Messantenne, die ein erstes räumliches Empfangsprofil aufweist, welches erdwärts auf die Straße oder parallel zur Straßenoberfläche ausgerichtet ist, einer Empfangssignalspektrum-Analyseeinrichtung mit einer hiermit verbundenen, an der Straße installierten Analyseantenne, die ein zweites räumliches Empfangsprofil aufweist, welches himmelwärts von der Straße weg ausgerichtet ist, und einer mit der Empfangssignalstärke-Messeinrichtung und der Empfangssignalspektrum-Analyseeinrichtung verbundenen Registriereinrichtung, umfassend die folgenden Schritte:
- Empfangen des Funksignals innerhalb eines Funksignalfrequenzbereiches mittels der ersten Messantenne;
- Messen jeweils einer Signalstärke des empfangenen Funksignals zu mehreren zeitlich aufeinanderfolgenden Messzeitpunkten mittels der Empfangssignalstärke-Messeinrichtung;
- Empfangen eines Funksignals innerhalb des Funksignalfrequenzbereiches mittels der eine Analyseantenne;
- Ermitteln eines ersten Analysewertes einer Kanalspektrumcharakteristik eines ersten Kanalspektrums an Kanälen von Trägersignalen aus dem zu einem ersten Analysezeitpunkt empfangenen Funksignal mittels der Empfangssignalspektrum-Analyseeinrichtung;
- Ermitteln wenigstens eines zweiten Analysewertes der Kanalspektrumcharakteristik eines zweiten Kanalspektrums an Kanälen von Trägersignalen aus dem zu wenigstens einem zweiten Analysezeitpunkt empfangenen Funksignal mittels der Empfangssignalspektrum-Analyseeinrichtung;
- Vergleichen des ersten Analysewertes mit dem zweiten Analysewert und Ermittlung einer Kanalspektrumcharakteristik-Abweichung zu ermitteln aus dem Vergleich; und
- Registrieren des Funksignals als Störsignal in Abhängigkeit von dem ersten Analysewert und dem zweiten Analysewert mittels der Registriereinrichtung, wenn wenigstens einer der Analysezeitpunkte in einem Störsignalzeitabschnitt liegt, in dem die Mehrheit der gemessenen Signalstärken einen vorgegebenen Signalstärke-Schwellwert überschreitet, und die Kanalspektrumcharakteristik-Abweichung eine vorgegebene Abweichungsschwelle überschreitet.

## Claims

1. A device for registering an interference signal capable of impairing a position determination function of a radio signal receiver, in particular a mobile radio receiver or a receiver of a global navigation satellite system, having:
- a receive signal strength measuring device (20) having a first measuring antenna (21) which is connected with it, installed on a road and designed to receive a radio signal within a radio signal frequency range, and has a first spatial receive profile, which is oriented earthward on the road or parallel to the road surface, wherein the receive signal strength measuring device (20) is designed to measure at several time-consecutive measuring points one signal strength of the received radio signal respectively;
- a receive signal spectrum analysis device (10) having an analysis antenna (11) which is connected with it, installed on the road and designed to receive the radio signal within the radio signal frequency range and has a second spatial receive profile, which is facing skywards from the road, wherein the receive signal spectrum analysis device (10) is designed to determine a first analysis value of a channel spectrum characteristic of a first channel spectrum at channels of carrier signals from the radio signal received at a first analysis time and at least a second analysis value of the channel spectrum characteristic of a second channel spectrum at channels of carrier signals from the radio signal received at at least a second analysis time; and
- a registration device (40) which is connected to the receive signal strength measuring device (20) and the receive signal spectrum analysis device (10) and designed to compare the first analysis value with the second analysis value and to determine therefrom a channel spectrum characteristic deviation and to register the radio signal as an interference signal depending on the first analysis value and the second analysis value, if at least one of the analysis times lies in an interference signal time section in which the majority of the measured signal strengths exceeds a predetermined signal strength threshold and the channel spectrum characteristic deviation exceeds a predetermined deviation threshold.

2. The device according to claim 1, **characterized in that** the channel spectrum characteristic is a number of channels contained in the channel spectrum, a marking of the channels contained in the channel spectrum, a correlation quality of the channels contained in the channel spectrum, a correlation time of one or more of the channels contained in the channel spectrum and / or a correlation signal width of one or more of the channels contained in the channel spectrum.

3. The device according to claim 1, **characterized in that** the receive signal spectrum analysis device is designed to identify as channel spectrum characteristic a determinability of the first channel spectrum and the second channel spectrum by means of analysis of the received radio signal, respectively, and the registration device is designed to register the radio signal as an interference signal, if the first analysis value corresponds to a given determinability of the first channel spectrum in a time range outside the reference time section and the second analysis value corresponds to an insufficient determinability of the second channel spectrum in a time range within the interference signal time section.

4. The device according to one of the preceding claims, **characterized in that** the receive signal strength measuring device is designed to determine from the measured signal strengths the interference signal time section, in which the majority of the measured signal strengths exceeds a predetermined signal strength threshold, wherein the device is designed to select the first analysis time and / or the second analysis time within the determined interference signal time section.

5. The device according to one of the preceding claims, **characterized in that** the receive signal spectrum analysis device is designed to determine the first channel spectrum and the second channel spectrum by means of a channel demultiplexing method from the received radio signal.

6. The device according to one of the preceding claims, **characterized by** a second measuring antenna connected to the receive signal strength measuring device which is installed on the road and designed to receive a comparative signal within the radio signal frequency range, wherein the receive signal strength measuring device is designed to measure a comparative signal strength of the received comparison signal, and the device is designed to register the radio signal only as a interference signal, if its signal strength is greater than the comparative signal strength.

7. The device according to one of the preceding claims, **characterized by** a counting device connected to the registration device, which is designed to detect passing vehicles and to determine a time-dependent traffic flow value, wherein the registration device is designed to register a vehicle-bound interference signal depending on the traffic flow value and the duration of the interference signal time section.

8. The device according to one of the preceding claims, **characterized by** a detection device connected to the registration device, which is designed to detect passing vehicles at at least one detection time, wherein the registration device is designed to register a vehicle-bound interference signal, if the detection time of a vehicle is in the interference signal time section.

9. The device according to one of the preceding claims, **characterized in that**
- the receive signal spectrum analysis device is designed to determine at least a third analysis value of the channel spectrum characteristic of a third channel spectrum at channels of carrier signals from the radio signal received at at least a third analysis time and
- the device is designed to generate a communication signal depending on the registration of an interference signal and depending on the third analysis value, if the third analysis time is in the interference signal time section.

10. A system with a device according to claim 9 and an image recording device, which is designed to receive the communication signal of the device and to record an image in response to the communication signal or to select from several captured images at least one image whose recording time is within a given time frame around the reception time of the communication signal or a time value transmitted with the communication signal.

11. A method for registering an interference signal capable of impairing a position determination function of a radio signal receiver, in particular a mobile phone receiver or a receiver of a global navigation satellite system, by means of a receive signal strength measuring device having a first measuring antenna which is connected with it, installed on a road and has a first spatial reception profile, which is oriented earthward towards the road or parallel to the road surface, a receive signal spectrum analysis device having a connected, road-installed analysis antenna which has a second spatial reception profile, which is facing skywards from the road, and a registration device connected with the receive signal strength measuring device and the receive signal spectrum analysis device, comprising the following steps:
- receiving the radio signal within a radio signal frequency range by means of the first measuring antenna;
- measuring one signal strength of the received radio signal at several time-consecutive measuring points by means of the receive signal strength measuring device respectively;
- receiving a radio signal within the radio signal frequency range by means of the analysis antenna;
- determining a first analysis value of a channel spectrum characteristic of a first channel spectrum at channels of carrier signals from the radio signal received at a first analysis time by means of the receive signal spectrum analysis device;
- determining at least one second analysis value of the channel spectrum characteristic of a second channel spectrum at channels of carrier signals from the radio signal received at at least a second analysis time by means of the receive signal spectrum analysis device;
- comparing the first analysis value with the second analysis value and determining a channel spectrum characteristic deviation from the comparison; and
- registering the radio signal as an interference signal depending on the first analysis value and the second analysis value by means of the registration device, if at least one of the analysis times is in an interference signal time section in which the majority of the measured signal strengths exceeds a predetermined signal strength threshold, and the channel spectrum characteristic deviation exceeds a predetermined deviation threshold.

## Revendications

1. Un dispositif pour enregistrer un signal d'interférence capable d'altérer la fonction de détermination de position d'un récepteur de signal radio, en particulier un récepteur radio mobile ou un récepteur d'un système mondial de navigation par satellite, comprenant :
- un dispositif de mesure de l'intensité du signal récepteur (20) ayant une première antenne de mesure (21) qui est connectée avec celui-ci, installée sur une route et conçue pour recevoir un signal radio dans une plage de fréquence de signal radio et a un premier profil de réception spatiale, qui est orienté vers la terre sur la route ou parallèle à la surface de la route, dans lequel le dispositif de mesure de l'intensité du signal récepteur (20) est conçu à mesurer à plusieurs points de mesure consécutifs respectivement l'intensité du signal du signal radio reçu ;
- un dispositif d'analyse de spectre de signal récepteur (10) ayant une antenne analytique (11) qui est connectée avec celui-ci, installée sur la route et conçue pour recevoir le signal radio dans la plage de fréquence de signal radio et a un deuxième profil de réception spatiale, qui est tourné de la route vers le ciel, dans lequel le dispositif d'analyse de spectre de signal récepteur (10) est conçu pour déterminer une première valeur d'analyse d'une caractéristique du spectre de canal d'un premier spectre de canal à des canaux des signaux porteurs à partir du signal radio reçu à un premier moment d'analyse et déterminer au moins une deuxième valeur d'analyse de caractéristique de spectre de canal d'un deuxième spectre de canal à des canaux des signaux porteurs à partir du signal radio reçu à au moins une deuxième moment d'analyse ; et
- un dispositif d'enregistrement (40) qui est connecté au dispositif de mesure de l'intensité du signal récepteur (20) et au dispositif d'analyse de spectre de signal récepteur (10) et conçu pour comparer la première valeur d'analyse avec la deuxième valeur d'analyse et déterminer de celles-ci pour une déviation de la caractéristique du spectre de canal et pour enregistrer le signal radio comme signal d'interférence en fonction de la première valeur d'analyse et de la deuxième valeur d'analyse, si au moins un des temps d'analyse est dans une section de temps du signal d'interférence, dans laquelle la majorité des intensités de signal mesurées dépasse un seuil d'intensité du signal prédéterminé, et la déviation de la caractéristique du spectre de canal dépasse un seuil de la déviation prédéterminé.

2. Le dispositif selon la revendication 1, **caractérisé en ce que** la caractéristique du spectre de canal est un certain nombre de canaux contenus dans le spectre de canal, un marquage des canaux contenus dans le spectre de canal, une qualité de corrélation des canaux contenus dans le spectre de canal, un temps de corrélation d'un ou plusieurs des canaux contenus dans le spectre de canal et / ou une largeur de signal de corrélation d'un ou plusieurs des canaux contenus dans le spectre de canal.

3. Le dispositif selon la revendication 1, **caractérisé en ce que** le dispositif d'analyse de spectre de signal récepteur est conçu pour identifier comme caractéristique du spectre de canal respectivement la possibilité de détermination du premier spectre de canal et du deuxième spectre de canal au moyen de l'analyse du signal radio reçu, et le dispositif d'enregistrement est conçu pour enregistrer le signal radio comme signal d'interférence, si la première valeur d'analyse correspond à une possibilité de détermination du premier spectre de canal donnée dans un intervalle de temps en dehors de l'intervalle de temps de référence et la deuxième valeur d'analyse correspond à une manque de possibilité de détermination du deuxième spectre de canal dans un intervalle de temps dans la section du temps du signal d'interférence.

4. Le dispositif selon l'une des revendications précédentes, **caractérisé en ce que** le dispositif de mesure de l'intensité du signal récepteur est conçu pour déterminer à partir des intensités de signal mesurées la section du temps d'interférence, dans laquelle la majorité des intensités de signal mesurées dépasse un seuil d'intensité du signal prédéterminé, dans lequel le dispositif est conçu pour sélectionner le premier temps d'analyse et / ou le deuxième temps d'analyse dans la section de temps de signal d'interférence déterminée.

5. Le dispositif selon l'une des revendications précédentes, **caractérisé en ce que** le dispositif d'analyse de spectre de signal récepteur est conçu pour déterminer le premier spectre de canal et le deuxième spectre de canal au moyen d'une méthode de démultiplexage de canal à partir du signal radio reçu.

6. Le dispositif selon l'une des revendications précédentes, **caractérisé par** une deuxième antenne de mesure qui est connectée avec le dispositif de mesure d'intensité du signal récepteur, installé sur la route et conçue pour recevoir dans la plage de fréquence de signal radio un signal comparatif, dans lequel le dispositif de mesure de l'intensité du signal récepteur est conçu pour mesurer une intensité du signal comparative du signal de comparaison reçu, et le dispositif est conçu pour enregistrer le signal radio uniquement comme signal d'interférence, si son intensité du signal est supérieure à l'intensité du signal comparatif.

7. Le dispositif selon l'une des revendications précédentes, **caractérisé par** un dispositif de comptage qui est connecté au dispositif d'enregistrement et conçu pour détecter les véhicules qui passent et pour déterminer une valeur de flux de trafic dépendante du temps, dans lequel le dispositif d'enregistrement est conçu pour enregistrer un signal d'interférence lié au véhicule en dépendance de la valeur de flux de trafic et de la durée de la section de temps du signal d'interférence.

8. Le dispositif selon l'une des revendications précédentes, **caractérisé par** un dispositif de détection qui est connecté au dispositif d'enregistrement et conçu pour détecter les véhicules qui passent à au moins un temps de détection, dans lequel le dispositif d'enregistrement est conçu pour enregistrer un signal d'interférence lié au véhicule, si le temps de détection d'un véhicule est dans la section du temps du signal d'interférence.

9. Le dispositif selon l'une des revendications précédentes, **caractérisé en ce que**
- le dispositif d'analyse de spectre du signal récepteur est conçu pour déterminer au moins une troisième valeur d'analyse de la caractéristique du spectre de canal d'un troisième spectre de canal à des canaux des signaux porteurs à partir du signal radio reçu à au moins un troisième temps d'analyse et
- le dispositif est conçu pour générer un signal de communication en dépendance de l'enregistrement d'un signal d'interférence et en dépendance de la troisième valeur d'analyse, si le troisième temps d'analyse est dans la section de temps du signal d'interférence.

10. Un système ayant un dispositif selon la revendication 9 et un dispositif de prise d'image qui est conçu pour recevoir le signal de communication du dispositif et de prendre une image en réponse au signal de communication ou de sélectionner à partir de plusieurs images prises au moins une image dont le temps de prise est dans un délai donné autour du temps de réception du signal de communication ou une valeur temporelle transmise avec le signal de communication.

11. Une méthode d'enregistrement d'un signal d'interférence capable d'altérer une fonction de détermination de position d'un récepteur de signal radio, en particulier un récepteur radio mobile ou un récepteur d'un système mondial de navigation par satellite, au moyen d'un dispositif de mesure d'intensité du signal récepteur ayant une première antenne de mesure qui est connectée à celui-ci, installée sur une route et a un premier profil spatial de réception, qui est orienté vers la terre vers la route ou parallèle à la surface de la route, un dispositif d'analyse de spectre de signal récepteur avec une antenne d'analyse qui est connectée à celui-ci, installée sur la route et a un deuxième profil de réception spatiale, qui est tourné de la route vers le ciel, et un dispositif d'enregistrement relié au dispositif de mesure d'intensité du signal récepteur et le dispositif d'analyse de spectre de signal récepteur, comprenant les étapes suivantes:
- recevoir le signal radio dans une plage de fréquence de signal radio au moyen de la première antenne de mesure ;
- mesurer respectivement une intensité du signal du signal radio reçu à plusieurs temps de mesure consécutifs au moyen du dispositif de mesure de l'intensité du signal récepteur ;
- recevoir un signal radio dans la plage de fréquence du signal radio au moyen d'une antenne d'analyse ;
- déterminer une première valeur d'analyse d'une caractéristique de spectre de canal d'un premier spectre de canal à des canaux des signaux porteurs à partir du signal radio reçu au premier temps d'analyse au moyen du dispositif d'analyse de spectre de signal récepteur ;
- déterminer au moins une deuxième de valeur d'analyse de la caractéristique de spectre de canal d'un deuxième spectre de canal à des canaux des signaux porteurs du signal radio reçu à au moins un deuxième temps d'analyse au moyen du dispositif d'analyse de spectre de signal récepteur ;
- comparer la première valeur d'analyse avec la deuxième valeur d'analyse et déterminer une déviation de la caractéristique de spectre de canal à partir de la comparaison ; et
- enregistrer un signal radio comme signal d'interférence en dépendance de la première valeur d'analyse et de la deuxième valeur d'analyse au moyen du dispositif d'enregistrement, si au moins un des temps d'analyse est dans une section de temps de signal d'interférence, dans laquelle la majorité des intensités du signal mesurées dépasse un seuil d'intensité du signal prédéterminé et la déviation de la caractéristique de spectre de canal dépasse un seuil déviation prédéterminé.
